# EUROPÄISCHE PATENTSCHRIFT

(11) **EP 1 522 551 B1**
(45) Veröffentlichungstag und Bekanntmachung des Hinweises auf die Patenterteilung: **02.11.2006**
(21) Anmeldenummer: 04023472.6
(22) Anmeldetag: 01.10.2004
(51) Int. Cl.: C08K 5/5313, B01J 2/28, C08K 5/00

(54) **Phosphorhaltige Flammschutzmittelagglomerate**
Agglomerate flame retardants containing phosphorus
Agents d'ignifugation agglomérés contenant du phosphore

(30) Priorität: 07.10.2003 DE 10347012
(43) Veröffentlichungstag der Anmeldung: 13.04.2005
(73) Patentinhaber: Clariant Produkte (Deutschland) GmbH, 65929 Frankfurt am Main (DE)
(72) Erfinder: Bauer, Harald, Dr., 50170 Kerpen (DE); Hörold, Sebastian, Dr., 86420 Diedorf (DE); Krause, Werner, Dr., 50354 Hürth (DE); Sicken, Martin, Dr., 51149 Köln (DE)

(56) Entgegenhaltungen:
- EP-A- 0 487 974
- EP-A- 1 396 522
- EP-A- 1 396 523
- WO-A-03/035736

## Beschreibung

Die Erfindung bezieht sich auf phosphorhaltige Flammschutzmittelagglomerate geringer Schüttdichte, die Aggregate und/oder Primärteilchen aus Phosphinsäuresalzen und/oder Diphosphinsäuresalzen und/oder deren Polymere enthalten und mit Hilfe eines Hilfsmittels zusammenhaften. Die Erfindung betrifft auch ein Verfahren zur Herstellung dieser phosphorhaltigen Flammschutzmittelagglomerate und die Verwendung derselben als Flammschutzmittel in Polymeren.

Es ist essentiell, dass Flammschutzmittel so homogen wie möglich in einem Polymer verteilt sind. Eine gute Verteilung wird besonders durch ein gutes Fließverhalten des eingesetzten phosphorhaltigen Schüttgutes erreicht, was im Folgenden als "frei fließend" bezeichnet wird. Dies kann mit dem Aufbrechen der phosphorhaltigen Flammschutzmittelagglomerate in kleinere Teilchen bei der Zugabe zu dem Polymer verbunden sein, was im Folgenden als Dispergierung bezeichnet wird.

Pulver von phosphorhaltigen Flammschutzmitteln mit geringen Teilchengrößen (unter 500 µm) zeichnen sich durch geringe Schüttdichten (unter 300 g/l) aus. Nachteilig ist allerdings ihre starke Tendenz zur Staubentwicklung. Weiterhin ist nachteilig, dass die Dosierung bei der Einarbeitung in Polymere in Extrudern ungleichmäßig sein kann und sich dadurch eine inhomogene Verteilung des Flammschutzmittels im Polymer ergeben kann. Dies kann wiederum wegen lokaler Unterdosierung nachteilig für die Flammschutzwirkung sein.

Nach der Lehre der DE-A 102 41 376 gelingt es, phosphorhaltige Flammschutzmittel durch Kompaktierung zu granulieren. Dabei wird eine relativ hohe Schüttdichte erzielt, die hier erfindungsgemäß nicht erwünscht ist.

Nach der Lehre der DE-A 102 41 375 gelingt es auch, phosphorhaltige Flammschutzmittel durch Schmelzgranulierung zu agglomerieren. Dabei wird ebenfalls eine relativ hohe Schüttdichte erzielt, die erfindungsgemäß wiederum nicht erwünscht ist. Außerdem ist ein relativ hoher Gehalt an Wachsen oder anderen Hilfsmitteln notwendig, von denen bekannt ist, dass sie sich beispielsweise auf die Laserbeschriftbarkeit der Kunststoffformteile nachteilig auswirken.

Ein Agglomerat auf Melamincyanurat-Basis ist aus WO 03/035736 bekannt.

Es ist Aufgabe der vorliegenden Erfindung, phosphorhaltige Flammschutzmittel in Form von Partikeln mit niedriger Schüttdichte zur Verfügung zu stellen, die sich auf besonders einfache Art und Weise in das Polymer einarbeiten lassen und insbesondere nicht zu den vorgenannten "lokalen Anhäufungen" von Flammschutzmittel bei der Einarbeitung in das Polymer führen.

Gelöst wird diese Aufgabe durch ein Agglomerat eines phosphorhaltigen Flammschutzmittels mit niedriger Schüttdichte und trotzdem geringer Staubneigung.

Gegenstand der Erfindung sind daher phosphorhaltige Flammschutzmittelagglomerate, enthaltend
a) 99,99 bis 80 Gew.-% Aggregate und/oder Primärteilchen von einem Phosphinsäuresalz der Formel (I) und/oder von einem Diphosphinsäuresalz der Formel (II) und/oder von deren Polymeren, 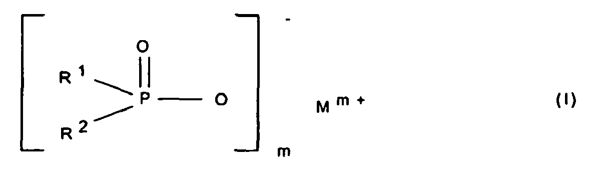 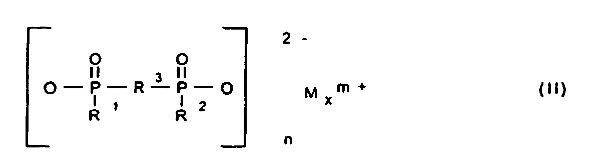 worin
   - R¹, R²: gleich oder verschieden sind und C₁-C₆-Alkyl, linear oder verzweigt und/oder Aryl;
   - R³: C₁-C₁₀-Alkylen, linear oder verzweigt, C₆-C₁₀-Arylen, -Alkylarylen oder -Arylalkylen;
   - M: Mg, Ca, Al, Sb, Sn, Ge, Ti, Fe, Zr, Ce, Bi, Sr, Mn, Li, Na, K und/oder eine protonierte Stickstoffbase;
   - m: 1 bis 4; n 1 bis 4; x 1 bis 4 bedeuten und
b) 0,01 bis 20 Gew.-% Hilfsmittel, bei denen es sich um Polymere oder Copolymere basierend auf Vinylpyrrolidon, Vinylacetat und Vinylcaprolactam oder Mischungen davon handelt und/oder um Polymere oder Copolymere basierend auf Epoxiden, Urethanen, Acrylaten, Estern, Amiden, Stearaten, Olefinen, Cellulosederivativen oder Mischungen davon.

Unter dem Begriff phosphorhaltige Flammschutzmittelagglomerate werden erfindungsgemäß Teilchen einer phosphorhaltigen FlammschutzmittelZusammensetzung verstanden, die aus Primärpartikeln und/oder Aggregaten eines Phosphinsäuresalzes der Formel (I) und/oder eines Diphosphinsäuresalzes der Formel (II) und/oder deren Polymeren bestehen und die durch ein Hilfsmittel aneinander gebunden sind.

Bevorzugt enthalten die phosphorhaltigen Flammschutzmittelagglomerate
a) 99,9 bis 85 Gew.-% Aggregate und/oder Primärteilchen von einem Phosphinsäuresalz der Formel (I) und/oder von einem Diphosphinsäuresalz der Formel (II) und/oder von deren Polymeren und
b) 0,1 bis 15 Gew.-% Hilfsmittel.

Besonders bevorzugt enthalten die phosphorhaltigen Flammschutzmittelagglomerate
a) 99,8 bis 95 Gew.-% Aggregaten und/oder Primärteilchen von einem Phosphinsäuresalz der Formel (I) und/oder von einem Diphosphinsäuresalz der Formel (II) und/oder von deren Polymeren und
b) 0,2 bis 5 Gew.-% Hilfsmittel.

Die Erfindung betrifft auch phosphorhaltige Flammschutzmittelagglomerate, die
a) 99,99 bis 80 Gew.-% Aggregate und/oder Primärteilchen von einem Phosphinsäuresalz der Formel (I) und/oder von einem Diphosphinsäuresalz der Formel (II) und/oder von deren Polymeren und mindestens einem Synergisten und
b) 0,01 bis 20 Gew.-% Hilfsmittel enthalten.

Bevorzugt enthalten diese phosphorhaltigen Flammschutzmittelagglomerate
a) 99,9 bis 85 Gew.-% Aggregate und/oder Primärteilchen von einem Phosphinsäuresalz der Formel (I) und/oder von einem Diphosphinsäuresalz der Formel (II) und/oder von deren Polymeren und mindestens einem Synergisten und
b) 0,1 bis 15 Gew.-% Hilfsmittel.

Besonders bevorzugt enthalten diese phosphorhaltigen Flammschutzmittelagglomerate
a) 99,8 bis 95 Gew.-% Aggregate und/oder Primärteilchen von einem Phosphinsäuresalz der Formel (I) und/oder von einem Diphosphinsäuresalz der Formel (II) und/oder von deren Polymeren und mindestens einem Synergisten und
b) 0,2 bis 5 Gew.-% Hilfsmittel.

Somit werden unter dem Begriff phosphorhaltige Flammschutzmittelagglomerate erfindungsgemäß ebenfalls Teilchen einer phosphorhaltigen FlammschutzmittelZusammensetzung verstanden, die aus Primärpartikeln und/oder Aggregaten/Primärteilchen eines Phosphinsäuresalzes der Formel (I) und/oder eines Diphosphinsäuresalz der Formel (II) und/oder deren Polymere und mindestens eines Synergisten bestehen und die durch ein Hilfsmittel aneinander gebunden sind.

Bevorzugt enthält die Komponente a) 30 bis 99,9 Gew.-% Phosphinsäuresalz der Formel (I) und/oder Diphosphinsäuresalz der Formel (II) und/oder deren Polymeren und 0,1 bis 70 Gew.-% mindestens eines Synergisten.

Besonders bevorzugt enthält die Komponente a) 50 bis 99 Gew.-% Phosphinsäuresalz der Formel (I) und/oder Diphosphinsäuresalz der Formel (II) und/oder deren Polymeren und 1 bis 50 Gew.-% mindestens eines Synergisten.

In einer bevorzugten Ausführungsform enthält die Komponente a) 50 bis 99 Gew.-% eines Zink- und/oder Aluminium- und/oder Titan- und/oder Zirkonium- und/oder Eisensalzes der Phosphinsäure der Formel (I) und/oder der Diphosphinsäure der Formel (II) und/oder deren Polymere und 1 bis 50 Gew.-% mindestens eines Synergisten aus der Gruppe der Salze der Phosphorsäure und deren Kondensationsprodukte und/oder der Salze der Cyanursäure mit Melamin und dessen Kondensationsprodukte und/oder deren Hydrolyseprodukte.

In einer weiteren Ausführungsform enthält die Komponente a) 50 bis 98 Gew.-% eines Zink- und/oder Aluminium- und/oder Titan- und/oder Zirkonium- und/oder Eisensalzes der Phosphinsäure der Formel (I) und/oder der Diphosphinsäure der Formel (II) und/oder deren Polymere und 1 bis 50 Gew.-% mindestens eines Synergisten aus der Gruppe der Salze der Phosphorsäure und deren Kondensationsprodukte und/oder der Salze der Cyanursäure mit Melamin und dessen Kondensationsprodukte und/oder Hydrolyseprodukte und 1 bis 50 Gew.-% mindestens eines Synergisten aus der Gruppe der Zinkverbindungen.

Bevorzugt bedeutet M in den Formeln (I) und (II) Calcium, Aluminium oder Titan.

Unter protonierten Stickstoffbasen werden bevorzugt die protonierten Basen von Ammoniak, Melamin, Triethanolamin, insbesondere NH₄⁺, verstanden.

Bevorzugt sind R¹, R² gleich oder verschieden und bedeuten C₁-C₆-Alkyl, linear oder verzweigt und/oder Phenyl.

Besonders bevorzugt sind R¹, R² gleich oder verschieden und bedeuten Methyl, Ethyl, n-Propyl, iso-Propyl, n-Butyl, tert.-Butyl, n-Pentyl und/oder Phenyl.

Bevorzugt bedeutet R³ Methylen, Ethylen, n-Propylen, iso-Propylen, n-Butylen, tert.-Butylen, n-Pentylen, n-Octylen oder n-Dodecylen; Phenylen oder Naphthylen; Methyl-phenylen, Ethyl-phenylen, tert.-Butylphenylen, Methyl-naphthylen, Ethylnaphthylen oder tert.-Butylnaphthylen; Phenyl-methylen, Phenyl-ethylen, Phenylpropylen oder Phenyl-butylen.

Bevorzugt handelt es sich bei dem Synergisten um einen solchen, der eine Stickstoff-, Phosphor- oder Phosphorstickstoffverbindung enthält.

Bevorzugt handelt es sich bei dem Synergisten um Melaminphosphat, Dimelaminphosphat, Melaminpyrophosphat, Melaminpolyphosphate, Melampolyphosphate, Melempolyphosphate und/oder Melonpolyphosphate und/oder um Melaminkondensationsprodukte wie Melam, Melem und/oder Melon.

Solche Verbindungen und ihre Herstellung werden u.a. in der WO 96/16948, WO 98/39306, WO 98/45364 und WO 98/08898 beschrieben, wie etwa Melampolyphosphat (PMP-200^{®}) oder Melempolyphosphat (PMP-300^{®}), beide von Nissan Chemical Industries.

Erfindungsgemäß sind als Synergisten weiterhin bevorzugt Stickstoffverbindungen der Formeln (III) bis (VIII) oder Gemische davon 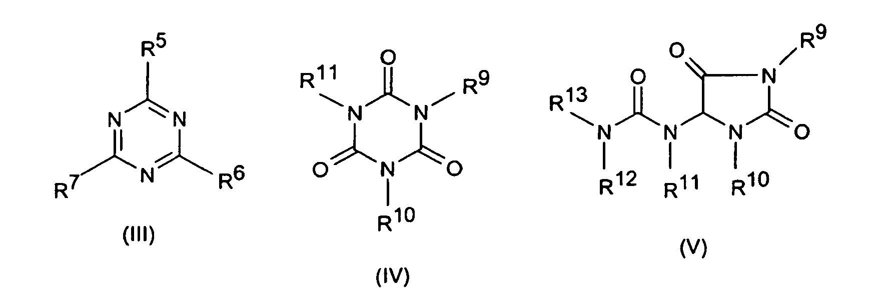 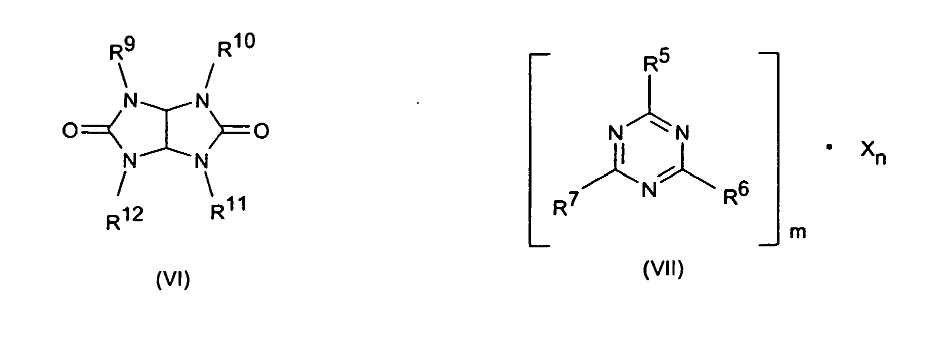 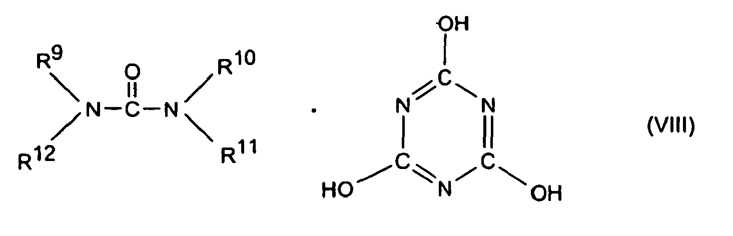 worin
- R⁵ bis R⁷: Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈₋Alkenyl, C₁-C₈-Alkoxy, -Acyl, -Acyloxy, C₆-C₁₂-Aryl oder -Arylalkyl, -OR⁸ und -N(R⁸)R⁹, sowie N-alicyclisch oder N-aromatisch,
- R⁸: Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈₋Alkenyl, C₁-C₈-Alkoxy, -Acyl, -Acyloxy oder C₆-C₁₂-Aryl oder -Arylalkyl,
- R⁹ bis R¹³: die gleichen Gruppen wie R⁸ sowie -O-R⁸, m und n unabhängig voneinander 1, 2, 3 oder 4, X Säuren, die Addukte mit Triazinverbindungen (III) bilden können, bedeuten.

Bevorzugt handelt es sich bei dem Synergisten auch um oligomere Ester des Tris(hydroxyethyl)isocyanurats mit aromatischen Polycarbonsäuren, Benzoguanamin, Tris(hydroxyethyl)isocyanurat, Allantoin, Glycouril, Melamin, Melamincyanurat, Dicyandiamid, Guanidin und/oder Carbodiimide; und/oder um stickstoffhaltige Phosphate der Formeln (NH₄)_{y} H_{3-y} PO₄ bzw. (NH₄ PO₃)_{z}, mit y gleich 1 bis 3 und z gleich 1 bis 10.000.

Andere Synergisten sind bevorzugt Sauerstoffverbindungen des Siliciums, Magnesiumverbindungen, Metallcarbonate von Metallen der zweiten Hauptgruppe des Periodensystems, roter Phosphor, Zink- oder Aluminiumverbindungen, Antimon oder andere Verbindungen.

Bevorzugt handelt es sich bei den Sauerstoffverbindungen des Siliciums um Salze und Ester der Orthokieselsäure und deren Kondensationsprodukte, um Silikate, Zeolithe und Kieselsäuren, um Glas-, Glas-Keramik oder Keramik-Pulver; bei den Magnesiumverbindungen um Magnesiumhydroxid, Hydrotalcite, Magnesium-Carbonate oder Magnesium-Calcium-Carbonate; bei den Aluminiumverbindungen um Aluminiumhydroxid oder -phosphat.

Bei den Magnesiumverbindungen sind Magnesiumoxid, Magnesiumhydroxid (z.B. Magnifin H5 der Fa. Albermarle), Magnesiumoxidhydroxide, Hydrotalcite, Dihydrotalcit, Magnesium-Carbonate, Magnesiumhydroxidcarbonate oder Magnesium-Calcium-Carbonate bevorzugt.

Geeignet sind auch Calciumverbindungen, wie Calciumhydroxid, Calciumoxid, Hydrocalumit.

Weiter handelt es sich bevorzugt um Zinkverbindungen, z.B. Zinkoxid (z.B. Zinkoxid aktiv von Rhein Chemie, Brüggemann KG, Zincit oder Calamin; Standard-Zinkoxid, Zinkweiss G6, Zinkoxid 2011, Zinkoxid F-80, Zinkweiss Pharma 8, Zinkweiss Pharma A, Zinkweiss Rotsiegel, Zinkweiss Weissiegel der Fa. Grillo-Werke AG), Zinkhydroxid, Zinkoxidhydrat,

Bevorzugt sind Zinksalze der Oxosäuren der vierten Hauptgruppe (wasserfreies Zinkcarbonat, basisches Zinkcarbonat, Zinkhydroxidcarbonat, basisches Zinkcarbonathydrat, (basisches) Zinksilicat, Zinkhexafluorosilicat, Zinkhexafluorosilicat hexahydrat, Zinkstannat, Zink-Magnesium-Aluminium-Hydroxid-Carbonat).

Bevorzugt ist elementares, metallisches Zink.

Bevorzugt sind Zinksalze der Oxosäuren der dritten Hauptgruppe (Zinkborat, z.B. Firebrake ZB, Firebrake 415 der Fa. Borax).

Bevorzugt sind Zinksalze der Oxosäuren der fünften Hauptgruppe (Zinkphosphat, Zinkpyrophosphat).

Bevorzugt sind Zinksalze der Oxosäuren der Übergangsmetalle (Zinkchromat(VI)hydroxyd (Zinkgelb), Zinkchromit, Zinkmolybdat, z.B. ^{®}Kemgard 911 B, Zinkpermanganat, Zinkmolybdat-Magnesiumsilicat, z.B. Kemgard 911 C der Fa. Sherwin-Williams Company, Zinkpermanganat)

Bevorzugte Zinksalze sind auch solche mit organischen Anionen, wie Zinksalze von Mono-, Di-, Oligo-, Polycarbonsäuren (Salze der Ameisensäure (Zinkformiate), der Essigsäure (Zinkacetate, Zinkacetat dihydrat, Galzin), der Trifluoressigsäure (Zinktrifluoracetat hydrat), Zinkpropionat, Zinkbutyrat, Zinkvalerat, Zinkcaprylat, Zinkoleat, Zinkstearat (Liga 101 der Fa Greven Fett-Chemie), der Oxalsäure (Zinkoxalat), der Weinsäure (Zinktartrat), Citronensäure (tribasisches Zinkcitrat dihydrat), Benzoesäure (Benzoat), Zinksalicylat, Milchsäure (Zinklactat, Zinklactat trihydrat), Acrylsäure, Maleinsäure, Bernsteinsäure, von Aminosäuren (Glyzin), von sauren Hydroxofunktionen (Zinkphenolat etc), Zink-para-Phenolsulfonat, Zink-para-Phenolsulfonat hydrat, Zinkacetylacetonat hydrat, Zinktannat, Zinkdimethyldithiocarbamat, Zinktrifluormethansulfonat.

Bevorzugt sind Zinkphosphide, Zinksulfide, Zinkselenide und Zinktelluride.

Weiter handelt es sich bevorzugt um Aluminiumverbindungen, z.B. Aluminiumoxid, Aluminiumoxidhydroxid (Böhmit, Diaspor), Aluminiumhydroxid (Bayerit, Gibbsit, Hydrargillit) oder Aluminiumphosphat.

Weiter handelt es sich bevorzugt um Zinnverbindungen, z.B. Zinnoxid, Zinnoxidhydrate, Zinn (II) hydroxid, Zinnsulfid.

Bevorzugt sind Antimonverbindungen wie Antimontrioxid (Bluestar^{®} RG von Fa. Campine, Belgien; Antimontetroxid, Antimonpentoxid, Natriumantimonat (Pyrobloc^{®} SAP-2 von Fa. Cookson Specialty Additives) und/oder Antimontartrat.

Bevorzugte Synergisten sind auch Carbodiimide (z.B. ^{®}Stabaxol 1, Stabaxol P, Stabaxol KE 9193 der Fa. Rhein Chemie) N,N'Dicyclohexylcarbodiimid und/oder Polyisocyanate (z.B. ^{®}Basonat HI 100 oder ^{®}Vestanat T 1890/100), Carbonylbiscaprolactam (Fa Allinco) oder Styrol-Acryl-Polymere (^{®}Joncryl ADR-4357 der Fa. Johnson); sterisch gehinderten Phenole (z.B. Hostanox OSP 1), sterisch gehinderte Amine und Lichtstabilisatoren (z.B. Chimasorb 944, Hostavin-Typen), Phosphonite und Antioxidantien (z.B. Sandostab^{®} P-EPQ der Fa. Clariant) und Trennmittel (^{®}Licomont-Typen der Fa. Clariant).

Bevorzugt wird als Hilfsmittel auch Polyvinylalkohol, Polyvinylbutyral (PVB), Polyvinylcaprolactam, Hydroxyethylcellulose, Hydroxypropylcellulose und/oder Natriumcarboxymethylcellulose eingesetzt, und
bevorzugt beträgt der Schmelz- bzw. Erweichungspunkt des Hilfsmittels 40 bis 350 °C, bevorzugt 60 bis 300°C.

Bevorzugt wird als Hilfsmittel auch ein teilverseifter Polyvinylalkohol mit 85 bis 95 Mol-% Hydrolysegrad, einem Esterwert von 80 bis 220 mg KOH/g und einer Viskosität von 2,5 bis 49 mPas·s bei 20°C in 4 Gew.-% wässriger Dispersion eingesetzt.

Bevorzugt wird als Hilfsmittel auch ein vollverseifter Polyvinylalkohol mit 97 bis 100 Mol-% Hydrolysegrad, einem Esterwert von 3 bis 40 mg KOH/g und einer Viskosität von 2,8 bis 60 mPas·s bei 20°C in 4 Gew.-% wässriger Dispersion eingesetzt.

Bevorzugt beträgt die mittlere Teilchengröße der erfindungsgemäßen phosphorhaltigen Flammschutzmittelagglomerate 0,1 bis 3000 µm, bevorzugt 100 bis 3000 µm und besonders bevorzugt 200 bis 2000 µm.

Bevorzugt beträgt die Schüttdichte der phosphorhaltigen Flammschutzmittelagglomerate 80 bis 1500 g/l, bevorzugt 80 bis 800 g/l, besonders bevorzugt 200 bis 500 g/l und ganz besonders bevorzugt 200 bis 400 g/l.

Bevorzugt beträgt der mittlere Teilchendurchmesser der eingesetzten Phosphinat- bzw. Synergisten-Aggregate 0,1 bis 500 µm, bevorzugt 1 bis 100 µm.

Bevorzugt beträgt der mittlere Teilchendurchmesser der Phosphinat- bzw. Synergisten-Primärpartikel 0,1 bis 50 µm, bevorzugt 1 bis 10 µm.

Die Erfindung betrifft auch ein Verfahren zur Herstellung von phosphorhaltigen Flammschutzmittelagglomeraten, dadurch gekennzeichnet, dass man Aggregate und/oder Primärteilchen von einem Phosphinsäuresalz der Formel (I) und/oder von einem Diphosphinsäuresalz der Formel (II) und/oder von deren Polymeren und ggf. mindestens einem Synergisten in Gegenwart eines Hilfsmittels in einem Mischer, einer Wirbelschicht oder durch Sprühtrocknen agglomeriert.

Bevorzugt wird das Verfahren so ausgeführt, dass man Aggregate und/oder Primärteilchen von einem Phosphinsäuresalz der Formel (I) und/oder von einem Diphosphinsäuresalz der Formel (II) und/oder von deren Polymeren und ggf. mindestens einem Synergisten sowie dem Hilfsmittel in einem Lösungsmittel dispergiert, zum Wirbelbett dosiert, trocknet und granuliert, dann die Agglomerate entnimmt und das Gutkorn separiert.

Bevorzugt wird das Verfahren auch so ausgeführt, dass man Aggregate und/oder Primärteilchen von einem Phosphinsäuresalz der Formel (I) und/oder von einem Diphosphinsäuresalz der Formel (II) und/oder von deren Polymeren und ggf. mindestens einem Synergisten sowie das Hilfsmittel zum Wirbelbett dosiert, ein Lösungsmittel zudosiert, granuliert, dann die Agglomerate entnimmt und das Gutkorn separiert.

Bevorzugt wird das Verfahren auch so ausgeführt, dass man Aggregate und/oder Primärteilchen von einem Phosphinsäuresalz der Formel (I) und/oder von einem Diphosphinsäuresalz der Formel (II) und/oder von deren Polymeren und ggf. mindestens einem Synergisten sowie das Hilfsmittel zum Wirbelbett dosiert, granuliert, dann die Agglomerate entnimmt und das Gutkorn separiert.

Bevorzugt werden Überkorn und Unterkorn zurückgeführt.

Bevorzugt handelt es sich bei dem Lösungsmittel um Wasser, Alkohole, Glycole, Aromaten, Aliphaten, Cycloaliphaten, Ether, Glycolether, Ketone, Ester, Chlorierte Kohlenwasserstoffe und Aromaten oder Mischungen davon.

Die Agglomeration erfolgt einstufig oder mehrstufig bevorzugt bei einem Druck von 10 bis 100.000.000 Pa, über eine Zeitdauer von 0,01 bis 1000 h und einer Temperatur von -20 bis +500°C, besonders bevorzugt bei 50 bis 350°C.

Die Gas-Einlasstemperatur zum Wirbelbett beträgt bevorzugt 50 bis 320°C besonders bevorzugt 60 bis 250°C, die Austrittstemperatur ist bevorzugt 25 bis 180°C.

Die Erfindung betrifft auch eine flammgeschützte Polymerformmasse, die die erfindungsgemäße phosphorhaltigen Flammschutzmittelagglomerate enthält.

Bevorzugt enthält die flammgeschützte Polymerformmasse
1 bis 50 Gew.-% phosphorhaltige Flammschutzmittelagglomerate,
1 bis 99 Gew.-% thermoplastisches Polymer oder Mischungen derselben
0 bis 60 Gew.-% Additive
0 bis 60 Gew.-% Füllstoff.

Besonders bevorzugt enthält die flammgeschützte Polymerformmasse
5 bis 30 Gew.-% phosphorhaltige Flammschutzmittelagglomerate,
5 bis 90 Gew.-% thermoplastisches Polymer oder Mischungen derselben
5 bis 40 Gew.-% Additive
5 bis 40 Gew.-% Füllstoff.

Bevorzugt handelt es sich bei den thermoplastischen Polymeren um Polystyrol-Hl (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/Acrylnitril-Butadien-Styrol).

Besonders bevorzugt handelt es sich bei den thermoplastischen Polymeren um Polyamid, Polyester oder ABS.

Die Erfindung betrifft auch polymere Formkörper, Filme, Fäden und Fasern, die die erfindungsgemäßen phosphorhaltigen Flammschutzmittelagglomerate enthalten.

Bevorzugt handelt es sich bei dem Polymer um ein thermoplastisches oder ein duroplastisches Polymer.

Bevorzugt handelt es sich bei den thermoplastischen Polymeren um Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol), Polyamid, Polyester und/oder ABS.

Bevorzugt handelt es sich bei den duroplastischen Polymeren um Formaldehyd-, Epoxid-, Melamin- Phenolharz-Polymere und/oder Polyurethane.

Bevorzugt enthalten die polymeren Formkörper, Filme, Fäden und Fasern
1 bis 50 Gew.-% phosphorhaltige Flammschutzmittelagglomerate
1 bis 99 Gew.-% Polymer oder Mischungen derselben
0 bis 60 Gew.-% Additive
0 bis 60 Gew.-% Füllstoff.

Besonders bevorzugt enthalten die polymeren Formkörper, Filme, Fäden und Fasern 5 bis 30 Gew.- % phosphorhaltige Flammschutzmittelagglomerate
5 bis 90 Gew.-% Polymer oder Mischungen derselben
5 bis 40 Gew.-% Additive
5 bis 40 Gew.-% Füllstoff.

Die Erfindung betrifft schließlich auch eine Flammschutz-Beschichtung enthaltend
1 bis 50 % phosphorhaltige Flammschutzmittelagglomerate
0 bis 60 % Ammoniumpolyphosphat
0 bis 60 Gew.-% Additive und Hilfsstoffe.

Geeignete Synergisten sind Melaminphosphat (z.B. Melapur MPH, ^{®}Melapur MP der Fa. Ciba-DSM Melapur), Melaminacetat, Dimelaminphosphat, Pentamelamintriphosphat, Trimelamindiphosphat, Tetrakismelamintriphosphat, Hexakismelaminpentaphosphat, Melamindiphosphat, Melamintetraphosphat, Melaminpyrophosphat (z.B. ^{®}Budit 311 der Fa. Budenheim, ^{®}MPP-B der Fa. Sanwa Chemicals), Melaminpolyphosphate, Melampolyphosphate, Melempolyphosphate und/oder Melonpolyphosphate bevorzugt. Besonders bevorzugt sind Melaminpolyphosphate wie Melapur 200/70, Melapur CGX FR231 der Fa. Ciba-DSM Melapur, Budit 3141, 3141 CA und 3141 CB und Melaminpolyphosphat/Melaminpyrophosphat der Typen 13-1100, 13-1105, 13-1115, MPP02-244 der Fa. Hummel-Croton und PMP-100(R) bzw. PMP-200 der Fa. Nissan Chemical Industries, Japan. Ebenfalls geeignet: Melapur MC 25, Melapur MC oder Melapur MC XL der Fa. Ciba-DSM Melapur und Melamin-Ammonium-Polyphosphate.

Das Hilfsmittel ist so gewählt, dass das Agglomerat beim Einarbeiten in das Polymer in separate Aggregate und/oder Primärpartikel mit einer mittleren Teilchengrößen von 0,1 bis 500 µm aufbricht.

Das Hilfsmittel bindet die Aggregate und Primärpartikel aneinander, allerdings nicht so stark, dass diese sich nicht wieder in einem Polymer dispergieren lassen. Das bedeutet, dass je nach Prozess und/oder Prozessbedingungen, mit denen das phosphorhaltige Flammschutzmittel in Polymere eingearbeitet werden soll, unterschiedliche Hilfsmittel gewählt werden müssen. Der Schmelzpunkt oder Erweichungspunkt des Hilfsmittels wird so gewählt, dass es niedriger als der Schmelzpunkt des verwendeten Polymers bzw. niedriger als die Verarbeitungstemperatur des Polymers ist. Andererseits darf der Schmelzpunkt oder Erweichungspunkt des Hilfsmittels nicht so tief sein, dass es während der Lagerung der erfindungsgemäßen Flammschutzmittels erweicht und zu einem Verbacken der Agglomerate führt.

Bevorzugt liegt der Erweichungspunkt des Hilfsmittels 10 bis 50°C unter dem des Polymers.

Wenn die Agglomerate aus wässriger Aufschlämmung hergestellt werden sind wasserlösliche organische Hilfsmaterialien von Vorteil weil sie einfach der Aufschlämmung zugegeben werden können.

Bevorzugte Polyvinylalkohole sind ^{®}Mowiol 8-88, Mowiol 40-88 von Fa.Kuraray.

Bevorzugtes Verfahren zur Agglomerierung ist die Aufbauagglomeration. Besonders bevorzugt ist die Agglomerierung in Mischern, in der Wirbelschicht oder beim Sprühtrocknen. Überraschend wurde gefunden, dass ein erfindungsgemäßes Flammschutzmittelagglomerat durch Sprühgranulierung sehr gut zugänglich ist.

Unter dem Begriff Aggregat werden erfindungsgemäß Teilchen verstanden, die wiederum aus einer Anordnung von Primärteilchen bestehen.

Bei der Agglomerierung in Mischern werden die zu agglomerierenden Partikel mit Hilfsmittel benetzt und in Intensivmischern laufend vereinigt und getrennt.
Bevorzugte Intensivmischer sind solche der Fa. Lödige, Eirich usw. Das Hilfsmittel wird durch Aufsprühen oder Zudosieren aufgebracht.

Bei der Granulierung im Sprühbett wird das zu agglomerierende Material durch einen Rührer oder durch strömendes Gas zu einer Wirbelschicht aufgelockert. In diese Wirbelschicht wird weiteres zu agglomerierendes Material, das in einem Lösungsmittel dispergiert ist, aufgesprüht (Top-Spray). Die nassen Partikel lagern sich an die bereits vorhandenen Agglomerate an. Das Lösungsmittel wird durch einen heißen Gasstrom verdampft und die Agglomerate so getrocknet. Ein Teil des Wirbelbetts wird kontinuierlich ausgetragen, das Gutkorn abgetrennt grobe Partikel zerkleinert und mit zu feinen in das Wirbelbett zurückgeführt.

Der Wirbelschicht wird von unten Prozessluft mit Temperaturen im Bereich von etwa 50°C bis zur Zersetzungstemperatur der Einzelkomponenten des herzustellenden Agglomerates zugeführt. Durch die über die Prozessluft zugeführte Energie erfolgt im Fall von Dispersionen eine Trocknung und Verfestigung der sich durch Bedüsung bildenden Granulate. Die Strömungsgeschwindigkeit des Trocknungsmediums in dem Wirbelschichtapparat beträgt zwischen 0,5 bis 5 m/s. Durch Einstellung der Parameter der Prozessluft werden die Produktparameter wie Korngröße und Kornfeuchte variiert.

Die Keimbildung in der Wirbelschicht erfolgt insbesondere beim Start des Prozesses ohne Materialvorlage durch Sprühtrocknung. Während des Prozesses erfolgt die Keimbildung durch Eigenkeimbildung im Prozess durch Staub und Abrieb und/oder durch externe Keimbildung durch Rückführung von abgesiebtem und zerkleinerten Überkorn. Die durch die Prozessluft mitgerissenen Partikel, insbesondere der Feinstaub, werden in einem im Wirbelschichtapparat vorhandenen Staubabscheider (Entspannungsbereich und Zyklonabscheider oder integrierte Filter im Entspannungsbereich) und/oder in externen Abscheidersystemen von der Luft getrennt und beispielsweise als Keime in das Wirbelbett zurückgeführt. Weiterhin können über eine separate Eintragsvorrichtung pulverförmige Komponenten oder Zusatzkomponenten der Wirbelschicht zugeführt werden, die dann am Prozess der Granulatbildung teilnehmen. Damit entsteht ein erfindungsgemäßes staubarmes bzw. staubfreies Granulat.

Der Materialaustrag des Endproduktes erfolgt über Zellenradschleuse, Doppelpendelklappe, andere dicht schließende Austragsorgane oder über einen klassierenden Materialaustrag, dem ein dichtschließendes Austragsorgan nachgeschaltet ist, wobei bei klassierendem Materialaustrag die Leerrohrgeschwindigkeit der Klassierungsluft je nach Granulatkorngröße 2 bis 15 m/s beträgt und entgegen der Austragsrichtung des Endproduktes im Abzugsrohr gerichtet ist.

Bevorzugte Apparate sind für den Laborbetrieb Strea-1 Wirbelschichtgeräte der Fa. Niro, für die Produktion Schugi Vometec Anlagen der Fa. Hosokawa Schugi, Sprühgranulationsanlagen der Fa. Heinen und der Fa. Glatt (Typen: GF 20 mit 15 kg/h Wasserverdampfung, GF 50 mit 40 kg/h Wasserverdampfung, GF 125 mit 100 kg/h Wasserverdampfung, GF 250 mit 195 kg/h Wasserverdampfung, GF 500 mit 385 kg/h Wasserverdampfung, GF 750 mit 580 kg/h Wasserverdampfung, GF 1000 mit 770 kg/h Wasserverdampfung).

Bevorzugt enthält die Dispersion der Aggregate und/oder Primärteilchen aus Phosphinsäuresalzen und/oder Diphosphinsäuresalze und/oder deren Polymere und gegebenenfalls von Synergisten 0,1 bis 50 % Feststoffgehalt.

Die Granulation kann auch erfolgen, indem Agglomerate und/oder Primärpartikel und der Hilfsstoff als Pulver kontinuierlich gemischt und der Wirbelschicht zugeführt werden. Durch Behandlung des Pulvers mit warmer Luft im Bereich der Schmelztemperatur des Hilfsmittels kommt es durch Löse- und Kristallisiereffekte zur Granulation des Feststoffes.

Die Granulation kann auch erfolgen, indem Agglomerate und/oder Primärpartikel und der Hilfsstoff als Pulver kontinuierlich gemischt und in die Wirbelschicht zugeführt werden. Durch Behandlung des Pulvers mit zugesprühtem Lösemittel kommt es zur Granulation des Feststoffes.

In einer weiteren Ausführungsform werden erfindungsgemäße phosphorhaltige Flammschutzmittelagglomerate mit weiteren Kunststoffadditiven gecoated bzw. gepudert. Coating ist bevorzugt für Hydrolysestabilisatoren und kann in der gleichen Anlage erzielt werden (Top- und Bottom Spray).

Abpudern mit festen, feinkörnigen, schwerschmelzenden Pulvern (Talk oder andere beliebige Kunststoffadditive) ist bevorzugt um eine Trennwirkung zwischen den Agglomeraten zu erzielen und sie am Verbacken und Verkleben zu hindern und so eine verbesserte Lagerstabilität zu erreichen.

Bevorzugt ist auch die Aggregate und/oder Primärteilchen aus Phosphinsäuresalzen und/oder Diphosphinsäuresalze und/oder deren Polymere und gegebenenfalls von Synergisten in einem Mischer mit mittlerer oder hoher Scherrate zu mischen und dann in einem Wirbelbett zu trocken und zu agglomerieren. Bevorzugt ist hier eine Kombination eines Schugi-Mischers mit einem Wirbelbetttrockner.

Bevorzugt ist auch die Sprühtrocknung in einer solchen Fahrweise, dass die Dispersion gemeinsam mit getrocknetem Sprühpulver am Sprühturmkopf zerstäubt wird. Dadurch ist ein Agglomerationseffekt erzielbar.

Erfindungsgemäß werden die Aggregate und/oder Primärteilchen von
a) Phosphinsäuresalz der Formel (I) und/oder ein Diphosphinsäuresalz der Formel (II) und/oder deren Polymere
b) Synergisten in einem Lösungsmittel dispergiert.

Erfindungsgemäß wird das Hilfsmittel in dem gleichen Lösungsmittel gelöst bzw. dispergiert.

Weiterhin ist es bevorzugt die Aggregate und/oder Primärteilchen aus Phosphinsäuresalzen und/oder Diphosphinsäuresalze und/oder deren Polymere in dem erfindungsgemäßen Lösungsmittel und/oder in Gegenwart des Hilfsmittels und/oder in Gegenwart der Synergisten zu fällen.

Weiterhin ist es bevorzugt die Aggregate und/oder Primärteilchen der Synergisten in dem erfindungsgemäßen Lösungsmittel und/oder in Gegenwart des Hilfsmittels und/oder in Gegenwart der Phosphinsäuresalze und/oder Diphosphinsäuresalze und/oder deren Polymere zu fällen.

Geeignete Lösungsmittel sind auch Aceton, Acetonitril, Acetophenon (Methylphenylketon), Ameisensäuremethylester (Methyl formate), Iso-Amylalkohol, (3-Methyl-1-butanol), t-Amylalkohol (2-Methyl-2-butanol), n-Amylalkohol (1-Pentanol), Anisol (Methyl phenyl ether), Benzylalkohol, n-Butanol, Iso-Butanol, t-Butanol, n-Butyl-chlorid (1-Chlorbutan), sec-Butylchlorid (2-Chlorbutan), tert-Butylchlorid (2-Chlor-2-methylpropan), 1,2-Butylenglycol (1,2-Butandiol), 1,3-Butylenglycol (1,3- Butandiol), 1,4-Butylenglycol (1,4-Butandiol, Tetramethylenglycol), t-Butylmethylether, n-Butylvinylether, n-Butyraldehyd, , Chloressigsäureethylester, 2-Chlortoluol, Cyclohexan, Cyclopentan, Dibenzylether, 1,2-Dichlorbenzol, 1,4-Dichlorbenzol, Dichlormethan, Diethylenglycol, Diethylenglycoldiethylether, Diethylenglycoldimethylether (Diglyme), Diethylenglycolmonobutylether, Diethylenglycolmonomethylether, Diethylether, Diiso-propylether, 1,2-Dimethoxyethan (DME Monoglyme), Dimethylformamid, 1,4-Dioxan, Diphenylether, Essigsäuremethylester, Ethanol, Ethylacetat Essigester, Ethylenglycol, Ethylenglycolmonobutylether, n-Heptan, 1-Hexadecanol(Cetylalcohol), n-Hexan, 1-Hexanol, Iodcyclohexan, Kerosin, Mesitylen, Methanol, Methylacrylat, Methylcyclohexan, Methylethylketon, Methyl-iso-butylketon, Methylvinylether, 1-Octanol, iso-Octanol (2-Ethyl-1-hexanol), n-Octanol, Paraffinöl, Petrol White Spirit hochsiedend, Petrolether, Petrolether; hochsiedend, Petroleum (172-215°C), Petroleumbenzin (140-180°C), Petroleumbenzin (60-80°C), Petroleumbenzin tiefsiedend, 1,2-Propandiol, 1,3-Propandiol, Iso-Propanol (2-Propanol), n-Propanol, Propylenglycol, Tetraethylenglycoldimethylether, Tetrahydrofuran, Toluol, 1,1,1-Trichlorethan, 1,1,2-Trichlorethan, Trichlorethylen, Trichlormethan, 1,2,3-Trichlorpropan, Iso-Tridecanol, Triethanolamin, Triethylenglycoldimethylether (Triglyme), Triethylenglycolmonomethylether, Triisopropylether, m-Xylol, o-Xylol, p-Xylol oder Mischungen davon.

Bevorzugt handelt es sich bei den Polymeren um Polymere von Mono- und Diolefinen, beispielsweise Polypropylen, Polyisobutylen, Polybuten-1, Poly-4-methylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE), sowie Mischungen davon.

Bevorzugt handelt es sich bei den Polymeren um Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere und deren Copolymere mit Kohlenstoffmonoxid, oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z.B. Polyamiden.

Bevorzugt handelt es sich bei den Polymeren um Kohlenwasserstoffharze (z.B. C₅-C₉) inklusive hydrierte Modifikationen davon (z.B. Klebrigmacherharze) und Mischungen von Polyalkylenen und Stärke.

Bevorzugt handelt es sich bei den Polymeren um Polystyrol, Poly-(p-methylstyrol), Poly-(alpha -methylstyrol).

Bevorzugt handelt es sich bei den Polymeren um Copolymere von Styrol oder alpha-Methylstyrol mit Dienen oder Acrylderivaten, wie z.B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Blockcopolymere des Styrols, wie z.B. Styrol-Butadien-Styrol, Styrol-Isopren-Styrol, Styrol-Ethylen/Butylen-Styrol oder Styrol-Ethylen/Propylen-Styrol.

Bevorzugt handelt es sich bei den Polymeren um Pfropfcopolymere von Styrol oder alpha-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen, wie sie z.B. als sogenannte ABS-, MBS-, ASA- oder AES-Polymere bekannt sind.

Bevorzugt handelt es sich bei den Polymeren um halogenhaltige Polymere, wie z.B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

Bevorzugt handelt es sich bei den Polymeren um Polymere, die sich von alpha, beta-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile und Copolymere der genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

Bevorzugt handelt es sich bei den Polymeren um Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit Olefinen.

Bevorzugt handelt es sich bei den Polymeren um Homo- und Copolymere von cyclischen Ethern, wie Polyalkylenglykole, Polyethylenoxyd, Polypropylenoxyd oder deren Copolymere mit Bisglycidylethern.

Bevorzugt handelt es sich bei den Polymeren um Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.

Bevorzugt handelt es sich bei den Polymeren um Polyphenylenoxide und -sulfide und deren Mischungen mit Styrolpolymeren oder Polyamiden.

Bevorzugt handelt es sich bei den Polymeren um Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

Bevorzugt handelt es sich bei den Polymeren um Polyamide und Copolyamide, die sich von Diaminen und Dicarbonsäuren und/oder von Aminocarbonsäuren oder den entsprechenden Lactamen ableiten, wie Polyamid 4, Polyamid 6 (Akulon K122, DSM; Zytel 7301, Fa. DuPont; Durethan B 29, Fa. Bayer), Polyamid 6/6 (Zytel 101, Fa. DuPont; Durethan A30, Durethan AKV, Durethan AM, Fa. Bayer; Ultramid A3, Fa BASF) 6/10, 6/9, 6/12, 4/6, 12/12, Polyamid 11, Polyamid 12 (Grillamid L20, Fa. Ems Chemie), aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid oder Poly-m-phenylenisophthalamid. Blockcopolymere der vorstehend genannten Polyamide mit Polyolefinen, Olefin-Copolymeren, Ionomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

Bevorzugt handelt es sich bei den Polymeren um Polyharnstoffe, Polyimide, Polyamidimide, Polyetherimide, Polyesterimide, Polyhydantoine und Polybenzimidazole.

Bevorzugt handelt es sich bei den Polymeren um Polyester, die sich von Dicarbonsäuren und Dialkoholen und/oder von Hydroxycarbonsäuren oder den entsprechenden Lactonen ableiten, wie Polyethylenterephthalat, Polybutylenterephthalat (Celanex 2500, Celanex 2002, Fa Celanese; Ultradur, FA. BASF), Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.

Bevorzugt handelt es sich bei den Polymeren um Polycarbonate und Polyestercarbonate sowie um Polysulfone, Polyethersulfone und Polyetherketone.

Bevorzugt handelt es sich bei den Polymeren um vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze; geeignet sind auch trocknende und nicht-trocknende Alkydharze.

Bevorzugt handelt es sich bei den Polymeren um ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

Bevorzugt handelt es sich bei den Polymeren um vernetzbare Acrylharze, die sich von substituierten Acrylsäureestern ableiten, wie z.B. von Epoxyacrylaten, Urethanacrylaten oder Polyester-acrylaten.

Bevorzugt handelt es sich bei den Polymeren um Alkydharze, Polyesterharze und Acrylatharze, die mit Melaminharzen, Harnstoffharzen, Isocyanaten, Isocyanuraten, Polyisocyanaten oder Epoxidharzen vernetzt sind.

Bevorzugt handelt es sich bei den Polymeren um vernetzte Epoxidharze, die sich von aliphatischen, cycloaliphatischen, heterocyclischen oder aromatischen Glycidylverbindungen ableiten, z.B. Produkte von Bisphenol-A-diglycidylethern, Bisphenol-F-diglycidylethern, die mittels üblichen Härtern wie z.B. Anhydriden oder Aminen mit oder ohne Beschleunigern vernetzt werden.

Bevorzugt handelt es sich bei den Polymeren um Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO, PBT/PC/ABS oder PBT/PET/PC.

Die Agglomerate zeichnen sich durch verbesserte Flammschutzwirkung, besonders eine kurze Nachbrennzeit und verringertes Abtropfen und hervorragende mechanische Eigenschaften (Zugfestigkeit, Reißdehnung, Bruchdehnung, Zug-E-Modul, Schlagzähigkeit, Kernschlagzähigkeit) aus.

Die erfindungsgemäße Flammschutzmittelzusammensetzung wird bevorzugt in Compounds angewendet, die weiter zur Erzeugung von Polymer-Formkörpern verwendet werden.

Die Flammschutzmittelzusammensetzung können in thermoplastische Polymere eingearbeitet werden, indem z.B. alle Bestandteile als Pulver und/oder Granulat in einem Mischer vorgemischt und anschließend in einem Compoundieraggregat (z.B. einem Doppelschneckenextruder) in der Polymerschmelze homogenisiert werden. Bevorzugt sind Doppelschneckenextruder (ZSK30, ZSK 40, ZSK 58 der Fa. Krupp Werner & Pfleiderer). Die Schmelze wird üblicherweise als Strang abgezogen, gekühlt und granuliert. Die Komponenten können auch separat über eine Dosieranlage direkt in das Compoundieraggregat eingebracht werden.

Es ist ebenso möglich, die flammhemmenden Zusätze einem fertigen Polymergranulat bzw. -pulver beizumischen und die Mischung direkt auf einer Spritzgussmaschine zu Formteilen zu verarbeiten. Bevorzugte Füllstoffe sind Glas (bevorzugt in Kugel oder in Faserform).

Bevorzugte Additive sind Antioxidantien (z.B. Alkylierte Monophenole, Alkylthiomethylphenole , Hydrochinone und alkylierte Hydrochinone, Hydroxylierte Thiodiphenylether, Alkyliden-Bisphenole, O-, N- und S-Benzylverbindungen, Hydroxybenzylierte Malonate, Hydroxybenzyl-Aromaten, Triazinverbindungen, Benzylphosphonate, Acylaminophenole, Ester der beta -(3,5-Di-tert-butyl-4-hydroxyphenyl)-propionsäure mit ein- oder mehrwertigen Alkoholen, Ester der beta-(5-tert-Butvl-4-hvdroxy-3-methylphenyl)-propionsäure mit ein- oder mehrwertigen Alkoholen, Ester der beta -(3,5-Dicyclohexyl-4-hydroxyphenyl)-propionsäure mit ein- oder mehrwertigen Alkoholen, Ester der 3,5-Di-tert-butyl-4-hydroxyphenylessigsäure mit ein- oder mehrwertigen Alkoholen, Amide der beta -(3,5-Di-tert-butyl-4-hydroxyphenyl)-propionsäure, Ascorbinsäure (Vitamin C), aminische Antioxidantien, UV-Absorber und Lichtschutzmittel (2-(2'-Hydroxyphenyl)-benzotriazole, 2-Hydroxybenzophenone, Ester von gegebenenfalls substituierten Benzoesäuren, Acrylate; Nickelkomplexe des 2,2'-Thio-bis[4-(1,1,3,3-tetramethylbutyl)-phenols], Nickelsalze von 4-Hydroxy-3,5-di-tert-butylbenzylphosphonsäure-monoalkylestern, Nickelkomplexe von Ketoximen, Nickelkomplexe des 1-Phenyl-4-lauroyl-5-hydroxypyrazols, gegebenenfalls mit zusätzlichen Liganden; sterisch gehinderte Amine, Oxalsäurediamide, 2-(2-Hydroxyphenyl)-1,3,5-triazine), Gleitmittel, Farbmittel, Nukleierungsmittel (wie z.B. anorganische Stoffe wie z.B. Talk, Metalloxide wie Titandioxid oder Magnesiumoxid, Phosphate, Carbonate oder Sulfate von vorzugsweise Erdalkalimetallen; organische Verbindungen wie Mono- oder Polycarbonsäuren sowie ihre Salze wie z.B. 4-tert-Butylbenzoesäure, Adipinsäure, Diphenylessigsäure, Natriumsuccinat oder Natriumbenzoat; polymere Verbindungen wie z.B. ionische Copolymerisate ("Ionomere"), Füllstoffe und Verstärkungsmittel (wie z.B. Kreide und Calciumcarbonat, Silikate, Schichtsilicate Tonminerale z.B. Bentonite, Montmorillonite, Hectorite, Saponite, gefällte/pyrogene/kristalline/amorphe Kieselsäuren, Glasfasern, Glaskugeln, Asbest, Talk, Kaolin, Glimmer, Bariumsulfat, Metalloxide und -hydroxide, Oxide und/oder Hydroxide der Elemente der zweiten und dritten Hauptgruppe des Periodensystems der Elemente (bevorzugt Aluminium und Magnesium), Russ, Graphit, Holzmehl und Mehle oder Fasern anderer Naturprodukte, synthetische Fasern) oder Antistatika sein. Beispiele für die verwendbaren Zusätze sind in EP-A-584 567 angegeben.

### Bestimmung der Staubneigung

In eine Waschflasche werden 10 g des zu untersuchenden Materials eingewogen. Bei einem Gasstrom von 1 l/min wird durch das Material 20 min Stickstoff durchgeleitet. Die danach zurückbleibende Pulvermenge wird gewogen. Der ausgetragene Anteil wird durch die Einwaage dividiert und auf 100 % bezogen.

### Bestimmung der Kornverteilung mit dem Microtrac Granulometer

Die mittlere Teilchengröße (mittlere Korngröße, d₅₀) in wässriger Dispersion wird mit Hilfe eines Granulometer Microtrac ASVR/FRA der Fa. Leeds u. Northrup bestimmt. Gemessen wird die Reflexion bzw. Beugung eines Laserstrahls beim Durchdringen der Dispersion. Hierfür werden 400 ml Ethanol durch die Lasermesszelle gepumpt. Automatisch wird die Festkörperprobe (z.B. 70 mg) zudosiert und nach 10 min die Teilchengrößenverteilung bestimmt. Die Auswertungseinheit des Gerätes berechnet den d₅₀- und den d₉₀-Wert.

### Sprühgranulieren

In einer kleintechnischen Wirbelschichtanlage GF 20 der Fa. Glatt mit klassierendem Granulataustrag werden 12 kg/h Suspension zu einem Granulat verarbeitet.

Die Wirbelschicht wird mit 110 °C warmer Bodenluft im fluidisierten Zustand gehalten. Die Leerrohrgeschwindigkeit im Apparat beträgt dabei 1,5 m/s. Die Sprühlösung wird mit einer Zweistoffdüse in die Wirbelschicht eingebracht. Die feinverdüsten Tröpfchen der Suspension lagern sich an dem Schichtmaterial an und trocknen an dessen Oberfläche. Es kommt zum Granulatwachstum. Es wird kontinuierlich Granulat ausgetragen.

Herstellung, Verarbeitung und Prüfung von flammhemmenden Compounds und Kunststoff-Formkörpern

Die Flammschutzmittelkomponenten werden mit dem Polymergranulat und evtl. Additiven vermischt und auf einem Doppelschnecken-Extruder (Typ Leistritz LSM 30/34) bei Temperaturen von 230 bis 260°C (PBT), von 260°C (PA6) bzw. von 260 bis 280°C (PA 66) eingearbeitet. Der homogenisierte Polymerstrang wird abgezogen, im Wasserbad gekühlt und anschließend granuliert.

Nach ausreichender Trocknung werden die Formmassen auf einer Spritzgießmaschine (Typ Aarburg Allrounder) bei Massetemperaturen von 240 bis 270°C (PBT) von 275°C (PA 6) bzw. von 260 bis 290°C (PA 66) zu Prüfkörpern verarbeitet.

Soweit nicht anders angegeben, handelt es sich bei den nachfolgenden %-Angaben immer um Gew.-%. Gew.-Teile werden mit "GT" abgekürzt.

### Beispiel 1

Entsprechend der allgemeinen Vorschrift "Sprühgranulieren" wurde eine Dispersion aus 9,9 GT Aluminiumphosphinat, 0,1 GT Polyvinylalkohol, 2 GT Aceton und ca. 88 GT Wasser hergestellt und zu einem phosphorhaltigen Flammschutzmittelagglomerat aus 99 % Aluminiumphosphinat und 1 % Polyvinylalkohol verarbeitet (Tabelle 1).

### Beispiel 2

Entsprechend der allgemeinen Vorschrift "Sprühgranulieren" wurde eine Dispersion aus 24,75 GT Aluminiumphosphinat, 0,25 GT Polyvinylalkohol, 2 GT Isopropanol und ca. 73 GT Wasser hergestellt und zu einem phosphorhaltigen Flammschutzmittelagglomerat aus 99 % Aluminiumphosphinat und 1 % Polyvinylalkohol verarbeitet (Tabelle 1).

### Beispiel 3

Entsprechend der allgemeinen Vorschrift "Sprühgranulieren" wurde eine Dispersion aus 12,44 GT Aluminiumphosphinat, 12,44 GT Harnstoffcyanurat, 0,125 GT Polyvinylalkohol, 2 GT Tensid und ca. 73 GT Wasser hergestellt und zu einem phosphorhaltigen Flammschutzmittelagglomerat aus 49,75 % Aluminiumphosphinat, 49,75 % Harnstoffcyanurat und 0,5 % Polyvinylalkohol verarbeitet (Tabelle 1).

### Beispiel 4

Entsprechend der allgemeinen Vorschrift "Sprühgranulieren" wurde eine Dispersion aus 16,6 GT Aluminiumphosphinat, 8,2 GT Melamincyanurat, 0,25 GT Polyvinylalkohol, 2 GT Isopropanol und 73 GT Wasser hergestellt und zu einem phosphorhaltigen Flammschutzmittelagglomerat aus 66,3 % Aluminiumphosphinat, 32,7 % Melamincyanurat und 1 % Polyvinylalkohol verarbeitet (Tabelle 1).

### Beispiel 5

Entsprechend der allgemeinen Vorschrift "Sprühgranulieren" wurde eine Dispersion aus 16,6 GT Aluminiumphosphinat, 4,0 GT Melamin, 4,1 GT Cyanurat, 0,25 GT Polyvinylalkohol, 2 GT Isopropanol und ca. 73 GT Wasser hergestellt und zu einem phosphorhaltigen Flammschutzmittelagglomerat aus 66,3 % Aluminiumphosphinat, 32,7 % Melamincyanurat und 1 % Polyvinylalkohol verarbeitet (Tabelle 1).

### Beispiel 6

Entsprechend der allgemeinen Vorschrift "Sprühgranulieren" wurde eine Dispersion aus 6,7 GT Aluminiumphosphinat, 3,3 GT Melaminpolyphosphat, 0,05 GT Polyvinylalkohol, 1 GT Isopropanol und 89 GT Wasser hergestellt und zu einem phosphorhaltigen Flammschutzmittelagglomerat aus 66,7 % Aluminiumphosphinat, 32,8 % Melamincyanurat und 0,5 % Polyvinylalkohol verarbeitet (Tabelle 1).

### Beispiel 7

Entsprechend der allgemeinen Vorschrift "Sprühgranulieren" wurde eine Dispersion aus 6,7 GT Aluminiumphosphinat, 3,3 GT Melaminpolyphosphat, 0,05 GT Polyvinylalkohol, 5 GT Isopropanol und ca. 85 GT Wasser hergestellt und zu einem phosphorhaltigen Flammschutzmittelagglomerat aus 66,7 % Aluminiumphosphinat, 32,8 % Melamincyanurat und 0,5 % Polyvinylalkohol verarbeitet (Tabelle 1).

### Beispiel 8

Entsprechend der allgemeinen Vorschrift "Sprühgranulieren" wurde eine Dispersion aus 6,7 GT Aluminiumphosphinat, 3,3 GT Melaminpolyphosphat, 0,05 GT Polyvinylalkohol, 10 GT Isopropanol und 80 GT Wasser hergestellt und zu einem phosphorhaltigen Flammschutzmittelagglomerat aus 66,7 % Aluminiumphosphinat, 32,8 % Melaminpolyphosphat und 0,5 % Poly-vinylalkohol verarbeitet (Tabelle 1).

### Beispiel 9

Entsprechend der allgemeinen Vorschrift "Sprühgranulieren" wurde eine Dispersion aus 6,7 GT Aluminiumphosphinat, 3,3 GT Melaminpolyphosphat, 0,05 GT Polyvinylalkohol, 90,1 GT Isopropanol hergestellt und zu einem phosphorhaltigen Flammschutzmittelagglomerat aus 66,7 % Aluminiumphosphinat, 32,8 % Melaminpolyphosphat und 0,5 % Polyvinylalkohol verarbeitet (Tabelle 1).

### Beispiel 10

Entsprechend der allgemeinen Vorschrift "Sprühgranulieren" wurde eine Dispersion aus 9 GT Aluminiumphosphinat, 1 GT Melaminpolyphosphat, 0,05 GT Polyvinylalkohol, 5 GT Isopropanol und 85 GT Wasser hergestellt und zu einem phosphorhaltigen Flammschutzmittelagglomerat aus 89,6 % Aluminiumphosphinat, 10 % Melaminpolyphosphat und 0,5 % Polyvinylalkohol verarbeitet (Tabelle 1).

### Beispiel 11

Entsprechend der allgemeinen Vorschrift "Sprühgranulieren" wurde eine Dispersion aus 1 GT Aluminiumphosphinat, 8,9 GT Melaminpolyphosphat, 0,05 GT Polyvinylalkohol, 5 GT Isopropanol und 85 GT Wasser hergestellt und zu einem phosphorhaltigen Flammschutzmittelagglomerat aus 10 % Aluminiumphosphinat, 89,5 % Melaminpolyphosphat und 0,5 % Poly-vinylalkohol verarbeitet (Tabelle 1).

### Beispiel 12

Entsprechend der allgemeinen Vorschrift "Sprühgranulieren" wurde eine Dispersion aus 13,3 GT Aluminiumphosphinat, 6,5 GT Melaminpolyphosphat, 0,2 GT Polyvinylalkohol, 5 GT Isopropanol und 75 GT Wasser hergestellt und zu einem phosphorhaltigen Flammschutzmittelagglomerat aus 66,3 % Aluminiumphosphinat, 32,7 % Melaminpolyphosphat und 1 % Polyvinylalkohol verarbeitet (Tabelle 1).

### Beispiel 13

Entsprechend der allgemeinen Vorschrift "Sprühgranulieren" wurde eine Dispersion aus 33,2 GT Aluminiumphosphinat, 16,3 GT Melaminpolyphosphat, 0,5 GT Polyvinylalkohol, 5 GT Isopropanol und 45 GT Wasser hergestellt und zu einem phosphorhaltigen Flammschutzmittelagglomerat aus 66,3 % Aluminiumphosphinat, 32,7 % Melamincyanurat und 1 % Polyvinylalkohol verarbeitet (Tabelle 1).

### Beispiel 14

Entsprechend der allgemeinen Vorschrift "Sprühgranulieren" wurde eine Dispersion aus 12,7 GT Aluminiumphosphinat, 6,4 GT Melaminpolyphosphat, 0,8 GT Zinkoxid, aktiv, 0,1 GT Polyvinylalkohol, 5 GT Isopropanol und 75 GT Wasser hergestellt und zu einem phosphorhaltigen Flammschutzmittelagglomerat aus 63,7 % Aluminiumphosphinat, 31,8 % Melaminpolyphosphat, 4 % Zinkoxid und 0,5 % Polyvinylalkohol verarbeitet (Tabelle 1).

### Beispiel 15

Entsprechend der allgemeinen Vorschrift "Sprühgranulieren" wurde eine Dispersion aus 12,7 GT Aluminiumphosphinat, 6,3 GT Melaminpolyphosphat, 0,8 GT Zinkoxid, aktiv, 0,2 GT Polyvinylalkohol, 5 GT Isopropanol und 75 GT Wasser hergestellt und zu einem phosphorhaltigen Flammschutzmittelagglomerat aus 63,3 % Aluminiumphosphinat, 31,7 % Melaminpolyphosphat, 4 % Zinkoxid und 1 % Polyvinylalkohol verarbeitet (Tabelle 1).

### Beispiel 16

Entsprechend der allgemeinen Vorschrift "Sprühgranulieren" wurde eine Dispersion aus 12,5 GT Aluminiumphosphinat, 6,3 GT Melaminpolyphosphat, 0,8 GT Zinkoxid, aktiv, 0,4 GT Polyvinylalkohol, 5 GT Isopropanol und 75 GT Wasser hergestellt und zu einem phosphorhaltigen Flammschutzmittelagglomerat aus 62,7 % Aluminiumphosphinat, 31,4 % Melaminpolyphosphat, 3,9 % Zinkoxid und 2 % Polyvinylalkohol verarbeitet (Tabelle 1).

### Beispiel 17

Entsprechend der allgemeinen Vorschrift "Sprühgranulieren" wurde eine Dispersion aus 11,5 GT Aluminiumphosphinat, 5,8 GT Melaminpolyphosphat, 0,8 GT Zinkoxid, aktiv, 2 GT Polyvinylalkohol, 5 GT Isopropanol und 75 GT Wasser hergestellt und zu einem phosphorhaltigen Flammschutzmittelagglomerat aus 57,6 % Aluminiumphosphinat, 28,8 % Melaminpolyphosphat, 3,6 % Zinkoxid und 10 % Polyvinylalkohol verarbeitet (Tabelle 1).

### Beispiel 18

Entsprechend der allgemeinen Vorschrift "Sprühgranulieren" wurde eine Dispersion aus 19 GT Aluminiumphosphinat, 0,8 GT Melaminpolyphosphat, 0,1 GT Zinkoxid, aktiv, 0,1 GT Polyvinylalkohol, 5 GT Isopropanol und 75 GT Wasser hergestellt und zu einem phosphorhaltigen Flammschutzmittelagglomerat aus 95 % Aluminiumphosphinat, 4 % Melaminpolyphosphat, 0,5 % Zinkoxid und 0,5 % Polyvinylalkohol verarbeitet (Tabelle 1).

### Beispiel 19

Entsprechend der allgemeinen Vorschrift "Sprühgranulieren" wurde eine Dispersion aus 0,8 GT Aluminiumphosphinat, 19 GT Melaminpolyphosphat, 0,1 GT Zinkoxid, aktiv, 0,1 GT Polyvinylalkohol, 5 GT Isopropanol und 75 GT Wasser hergestellt und zu einem phosphorhaltigen Flammschutzmittelagglomerat aus 4 % Aluminiumphosphinat, 95 % Melaminpolyphosphat, 0,5 % Zinkoxid und 0,5 % Polyvinylalkohol verarbeitet (Tabelle 1).

### Beispiel 20

Entsprechend der allgemeinen Vorschrift "Sprühgranulieren" wurde eine Dispersion aus 10 GT Aluminiumphosphinat, 5 GT Melaminpolyphosphat, 5 GT Zinkoxid, aktiv, 0,1 GT Polyvinylalkohol, 5 GT Isopropanol und 75 GT Wasser hergestellt und zu einem phosphorhaltigen Flammschutzmittelagglomerat aus 49,8 % Aluminiumphosphinat, 24,9 % Melaminpolyphosphat, 24,9 % Zinkoxid und 0,5 % Polyvinylalkohol verarbeitet (Tabelle 1).

### Beispiel 21

Entsprechend der allgemeinen Vorschrift "Sprühgranulieren" wurde eine Dispersion aus 12,7 GT Aluminiumphosphinat, 6,4 GT Melaminpolyphosphat, 0,8 GT Zinkborat, 0,1 GT Polyvinylalkohol, 5 GT Isopropanol und 75 GT Wasser hergestellt und zu einem phosphorhaltigen Flammschutzmittelagglomerat aus 63,7 % Aluminiumphosphinat, 31,8 % Melaminpolyphosphat, 4 % Zinkborat und 0,5 % Polyvinylalkohol verarbeitet (Tabelle 1).

### Beispiel 22 (nicht erfindungsgemäss)

Entsprechend der allgemeinen Vorschrift "Sprühgranulieren" wurde eine Dispersion aus 13,2 GT Aluminiumphosphinat, 6,6 GT Melaminphosphat, 0,2 GT Polyvinylpyrrolidon, 5 GT Isopropanol und 75 GT Wasser hergestellt und zu einem phosphorhaltigen Flammschutzmittelagglomerat aus 66 % Aluminiumphosphinat, 33 % Melaminpolyphosphat und 1 % Polyvinylpyrrolidon verarbeitet (Tabelle 1).

### Beispiel 23 (nicht erfindungsgemäss)

Entsprechend der allgemeinen Vorschrift "Sprühgranulieren" wurde eine Dispersion aus 13,2 GT Aluminiumphosphinat, 6,6 GT Melaminpyrophosphat, 0,2 GT Polyvinylpyrrolidon, 5 GT Isopropanol und 75 GT Wasser hergestellt und zu einem phosphorhaltigen Flammschutzmittelagglomerat aus 66 % Aluminiumphosphinat, 33 % Melaminpyrophosphat und 1 % Polyvinylpyrrolidon verarbeitet (Tabelle 1).

### Beispiel 24 Vergleich

Von einem nicht agglomerierten Phosphinat nach dem Stand der Technik werden Schüttdichte und Staubneigung bestimmt (Tabelle 2).

### Beispiel 25 Vergleich

Von einem Schmelzagglomerat nach dem Stand der Technik werden Schüttdichte und Staubneigung bestimmt (Tabelle 2).

### Beispiel 26 Vergleich

Von einem Schmelzagglomerat Phosphinat nach dem Stand der Technik werden Schüttdichte und Staubneigung bestimmt (Tabelle 2).

### Beispiel 27 Vergleich

Von einem Rollkompaktat nach dem Stand der Technik werden Schüttdichte und Staubneigung bestimmt (Tabelle 2).

### Beispiel 28 Vergleich

Von einem Rollkompaktat nach dem Stand der Technik werden Schüttdichte und Staubneigung bestimmt (Tabelle 2).

### Beispiel 29

Von dem erfindungsgemäßen Agglomerat aus Beispiel 1 werden Schüttdichte und Staubneigung bestimmt (Tabelle 2). Bei geringerer Schüttdichte (und im Vergleich zu Beispiel 25 und 26 geringerer Bindermenge) wird eine (zu Beispielen 25 bis 28) vergleichbare geringe Staubneigung erzielt.

### Beispiel 30

Von einem erfindungsgemäßen Agglomerat aus Beispiel 12 werden Schüttdichte und Staubneigung bestimmt (Tabelle 2). Bei geringerer Schüttdichte (und im Vergleich zu Beispiel 25 und 26 geringerer Bindermenge) wird eine (zu Beispielen 25 bis 28) vergleichbare Staubneigung erzielt.

### Beispiel 31

Von einem erfindungsgemäßen Agglomerat aus Beispiel 14 werden Schüttdichte und Staubneigung bestimmt (Tabelle 2). Bei geringerer Schüttdichte (und im Vergleich zu Beispiel 25 und 26 geringerer Bindermenge) wird eine (zu Beispielen 25 bis 28) vergleichbare Staubneigung erzielt.

### Beispiel 32

Von einem erfindungsgemäßen Agglomerat aus Beispiel 15 werden Schüttdichte und Staubneigung bestimmt (Tabelle 2). Bei geringerer Schüttdichte (und im Vergleich zu Beispiel 25 und 26 geringerer Bindermenge) wird eine (zu Beispielen 25 bis 28) vergleichbare Staubneigung erzielt.

### Beispiel 33

Von einem erfindungsgemäßen Agglomerat aus Beispiel 21 werden Schüttdichte und Staubneigung bestimmt (Tabelle 2). Bei geringerer Schüttdichte (und im Vergleich zu Beispiel 25 und 26 geringerer Bindermenge) wird eine (zu Beispielen 25 bis 28) vergleichbare Staubneigung erzielt.

### Beispiel 34

Gemäß der allgemeinen Vorschrift wird eine Mischung von 50 Gew.-% Polybutylenterephthalat Nr. 1, 20 Gew.-% Agglomerat aus Beispiel 1 und 30 Gew.-% Glasfasern Nr. 1 auf einem Doppelschnecken-Extruder zu einer Polymerformmasse compoundiert. Nach Trocknung werden die Formmassen auf einer Spritzgießmaschine zu Polymerformkörper verarbeitet.

### Beispiel 35

Gemäß der allgemeinen Vorschrift wird eine Mischung von 49 Gew.-% Polybutylenterephthalat Nr. 2, 20 Gew.-% Agglomerat aus Beispiel 4 1 Gew.-% Carbodiimid und 30 Gew.-% Glasfasern Nr. 1 auf einem Doppelschnecken-Extruder zu einer Polymerformmasse compoundiert. Nach Trocknung werden die Formmassen auf einer Spritzgießmaschine zu Polymerformkörper verarbeitet.

### Beispiel 36

Gemäß der allgemeinen Vorschrift wird eine Mischung von 49 Gew.-% Polybutylenterephthalat Nr. 2, 20 Gew.-% Agglomerat aus Beispiel 12, 1 Gew.-% Carbodiimid und 30 Gew.-% Glasfasern Nr. 1 auf einem Doppelschnecken-Extruder zu einer Polymerformmasse compoundiert. Nach Trocknung werden die Formmassen auf einer Spritzgießmaschine zu Polymerformkörper verarbeitet.

### Beispiel 37

Gemäß der allgemeinen Vorschrift wird eine Mischung von 50 Gew.-% Polyamid 6.6 Nr. 1, 20 Gew.-% Agglomerat aus Beispiel 12 und 30 Gew.-% Glasfasern Nr. 1 auf einem Doppelschnecken-Extruder zu einer Polymerformmasse compoundiert. Nach Trocknung werden die Formmassen auf einer Spritzgießmaschine zu Polymerformkörper verarbeitet.

### Beispiel 38

Gemäß der allgemeinen Vorschrift wird eine Mischung von 50 Gew.-% Polyamid 6.6 Nr. 1, 20 Gew.-% Agglomerat aus Beispiel 15 und 30 Gew.-% Glasfasern Nr. 1 auf einem Doppelschnecken-Extruder zu einer Polymerformmasse compoundiert. Nach Trocknung werden die Formmassen auf einer Spritzgießmaschine zu Polymerformkörper verarbeitet.

### Beispiel 39

Gemäß der allgemeinen Vorschrift wird eine Mischung von 50 Gew.-% Polyamid 6.6 Nr. 1, 20 Gew.-% Agglomerat aus Beispiel 21 und 30 Gew.-% Glasfasern Nr. 1 auf einem Doppelschnecken-Extruder zu einer Polymerformmasse compoundiert. Nach Trocknung werden die Formmassen auf einer Spritzgießmaschine zu Polymerformkörper verarbeitet.

### Beispiel 40

Gemäß der allgemeinen Vorschrift wird eine Mischung von 50 Gew.-% Polyamid 6.6 Nr. 2, 20 Gew.-% Agglomerat aus Beispiel 10 und 30 Gew.-% Glasfasern Nr. 1 auf einem Doppelschnecken-Extruder zu einer Polymerformmasse compoundiert. Nach Trocknung werden die Formmassen auf einer Spritzgießmaschine zu Polymerformkörper verarbeitet.

### Beispiel 41

Gemäß der allgemeinen Vorschrift wird eine Mischung von 50 Gew.-% Polyamid 6.6 Nr. 2, 20 Gew.-% Agglomerat aus Beispiel 11 und 30 Gew.-% Glasfasern Nr. 1 auf einem Doppelschnecken-Extruder zu einer Polymerformmasse compoundiert. Nach Trocknung werden die Formmassen auf einer Spritzgießmaschine zu Polymerformkörper verarbeitet.

### Beispiel 42

Gemäß der allgemeinen Vorschrift wird eine Mischung von 50 Gew.-% Polyamid 6.6 Nr. 2, 20 Gew.-% Agglomerat aus Beispiel 18 und 30 Gew.-% Glasfasern Nr. 1 auf einem Doppelschnecken-Extruder zu einer Polymerformmasse compoundiert. Nach Trocknung werden die Formmassen auf einer Spritzgießmaschine zu Polymerformkörper verarbeitet.

### Beispiel 43

Gemäß der allgemeinen Vorschrift wird eine Mischung von 50 Gew.-% Polyamid 6.6 Nr. 2, 20 Gew.-% Agglomerat aus Beispiel 19 und 30 Gew.-% Glasfasern Nr. 1 auf einem Doppelschnecken-Extruder zu einer Polymerformmasse compoundiert. Nach Trocknung werden die Formmassen auf einer Spritzgießmaschine zu Polymerformkörper verarbeitet.

### Beispiel 44

Gemäß der allgemeinen Vorschrift wird eine Mischung von 50 Gew.-% Polyamid 6.6 Nr. 2, 20 Gew.-% Agglomerat aus Beispiel 20 und 30 Gew.-% Glasfasern Nr. 1 auf einem Doppelschnecken-Extruder zu einer Polymerformmasse compoundiert. Nach Trocknung werden die Formmassen auf einer Spritzgießmaschine zu Polymerformkörper verarbeitet.

### Beispiel 45

Gemäß der allgemeinen Vorschrift wird eine Mischung von 50 Gew.-% Polyamid 6 Nr. 1, 20 Gew.-% Agglomerat aus Beispiel 12 und 30 Gew.-% Glasfasern Nr. 1 auf einem Doppelschnecken-Extruder zu einer Polymerformmasse compoundiert. Nach Trocknung werden die Formmassen auf einer Spritzgießmaschine zu Polymerformkörper verarbeitet.

### Beispiel 46

Gemäß der allgemeinen Vorschrift wird eine Mischung von 50 Gew.-% Polyamid 6 Nr. 1, 20 Gew.-% Agglomerat aus Beispiel 15 und 30 Gew.-% Glasfasern Nr. 1 auf einem Doppelschnecken-Extruder zu einer Polymerformmasse compoundiert. Nach Trocknung werden die Formmassen auf einer Spritzgießmaschine zu Polymerformkörper verarbeitet.

### Beispiel 47

Gemäß der allgemeinen Vorschrift wird eine Mischung von 50 Gew.-% Polyamid 6 Nr. 1, 20 Gew.-% Agglomerat aus Beispiel 21 und 30 Gew.-% Glasfasern Nr. 1 auf einem Doppelschnecken-Extruder zu einer Polymerformmasse compoundiert. Nach Trocknung werden die Formmassen auf einer Spritzgießmaschine zu Polymerformkörper verarbeitet.

### Beispiel 48

Gemäß der allgemeinen Vorschrift wird eine Mischung von 50 Gew.-% Polyamid 6 Nr. 2, 20 Gew.-% Agglomerat aus Beispiel 10 und 30 Gew.-% Glasfasern Nr. 1 auf einem Doppelschnecken-Extruder zu einer Polymerformmasse compoundiert. Nach Trocknung werden die Formmassen auf einer Spritzgießmaschine zu Polymerformkörper verarbeitet.

### Beispiel 49

Gemäß der allgemeinen Vorschrift wird eine Mischung von 50 Gew.-% Polyamid 6 Nr. 2, 20 Gew.-% Agglomerat aus Beispiel 11 und 30 Gew.-% Glasfasern Nr. 1 auf einem Doppelschnecken-Extruder zu einer Polymerformmasse compoundiert. Nach Trocknung werden die Formmassen auf einer Spritzgießmaschine zu Polymerformkörper verarbeitet.

### Beispiel 50

Gemäß der allgemeinen Vorschrift wird eine Mischung von 55 Gew.-% Polyamid 12, 20 Gew.-% Agglomerat aus Beispiel 3 und 30 Gew.-% Glasfasern Nr. 2 auf einem Doppelschnecken-Extruder zu einer Polymerformmasse compoundiert. Nach Trocknung werden die Formmassen auf einer Spritzgießmaschine zu Polymerformkörper verarbeitet.

### Verwendete Chemikalien

- Aluminiumphosphinat 1: Exolit OP 1230, Fa. Clariant GmbH
- Melamincyanurat: Melapur MC, Firma DSM Melapur
- Melamin: BASF AG
- Cyanursäure: Chemie Linz
- Melaminpolyphosphat: Melapur 200/70 der Fa. Ciba-DSM Melapur
- Melaminphosphat: Melapur MP der Fa. Ciba-DSM Melapur
- Melaminpyrophosphat: Budit 311 der Fa. Budenheim,
- Zinkoxid, aktiv: Bayer AG
- Zinkborat: Firebrake ZB, Fa. Borax
- Polyvinylalkohol: Mowiol 40-88, Fa. Clariant GmbH
- Polyvinylpyrrolidon: Luviskol K30, Fa. BASF
- Aceton: Shell Chemicals
- Isopropanol: Brenntag
- Tensid: Genapol 2822, Fa Clariant
- Aluminiumphosphinat 2 (Vgl.): Exolit OP 1311, Fa. Clariant
- Polybutylenterephthalat Nr. 1: Celanex 2500, Fa. Celanese
- Polybutylenterephthalat Nr. 2: Celanex 2002, Fa. Celanese
- Polyamid 6.6 Nr. 1: Ultramid A3, Fa. BASF
- Polyamid 6.6 Nr. 2: Durethan A 30, Fa. BASF
- Polyamid 6 Nr. 1: Zytel 7301, Fa. DuPont
- Polyamid 6 Nr. 2: Durethan B 29, Fa. BASF
- Polyamid 12: Grillamid L20, Fa. Ems Chemie
- Carbodiimid: Stabaxol KE 9193, Fa. Rhein Chemie
- Glasfasern Nr. 1: Vetrotex EC 10 983, 4,5mm, Fa. Saint Gobain
- Glasfasern Nr. 2: Chop Vantage 3540, PPG

**Tabelle 1-1**

| Beispiel | - | 1 | | 2 | | 3 | | 4 | | 5 | |
|---|---|---|---|---|---|---|---|---|---|---|---|
| M=Maische, P=Agglomerat | | M | A | M | A | M | A | M | A | M | A |
| Aluminiumphosphinat 1 | [%] | 9,9 | 99 | 24,75 | 99 | 12,44 | 49,75 | 16,6 | 66,3 | 16,6 | 66,3 |
| Harnstoffcyanurat | [%] | - | - | - | - | 12,44 | 49,75 | - | - | - | - |
| Melamincyanurat | [%] | - | - | - | - | - | - | 8,2 | 32,7 | - | 32,7 |
| Melamin | [%] | - | - | - | - | - | - | - | - | 4,0 | - |
| Cyanursäure | [%] | - | - | - | - | - | - | - | - | 4,1 | - |
| Melaminpolyphosphat | [%] | - | - | - | - | - | - | - | - | - | - |
| Melaminphosphat | [%] | - | - | - | - | - | - | - | - | - | - |
| Melaminpyrophosphat | [%] | - | - | - | - | - | - | - | - | - | - |
| Zinkoxid, aktiv | [%] | - | - | - | - | - | - | - | - | - | - |
| Zinkborat | [%] | - | - | - | - | - | - | - | - | - | - |
| Polyvinylalkohol | [%] | 0,1 | 1 | 0,25 | 1 | 0,125 | 0,5 | 0,25 | 1 | 0,25 | 1 |
| Polyvinylpyrrolidon | [%] | - | - | - | - | - | - | - | - | - | - |
| Aceton | [%] | 2 | - | - | - | - | - | - | - | - | - |
| Isopropanol | [%] | - | - | 2 | - | - | - | 2 | | 2 | - |
| Tensid | [%] | - | - | - | - | 2 | - | - | - | - | - |
| Wasser | [%] | ca.88 | - | ca.73 | - | ca.73 | - | ca.73 | - | ca.73 | - |

**Tabelle 1-2**

| Beispiel | - | 6 | | 7 | | 8 | | 9 | |
|---|---|---|---|---|---|---|---|---|---|
| M=Maische, P=Agglomerat | | M | A | M | A | M | A | M | A |
| Aluminiumphosphinat 1 | [%] | 6,7 | 66,7 | 6,7 | 66,7 | 6,7 | 66,7 | 6,7 | 66,7 |
| Harnstoffcyanurat | [%] | - | - | - | - | - | - | - | - |
| Melamincyanurat | [%] | - | - | - | - | - | - | - | - |
| Melamin | [%] | - | - | - | - | - | - | - | - |
| Cyanursäure | [%] | - | - | - | - | - | - | - | - |
| Melaminpolyphosphat | [%] | 3,3 | 32,8 | 3,3 | 32,8 | 3,3 | 32,8 | 3,3 | 32,8 |
| Melaminphosphat | [%] | - | - | - | - | - | - | - | - |
| Melaminpyrophosphat | [%] | - | - | - | - | - | - | - | - |
| Zinkoxid, aktiv | [%] | - | - | - | - | - | - | - | - |
| Zinkborat | [%] | - | - | - | - | - | - | - | - |
| Polyvinylalkohol | [%] | 0,05 | 0,5 | 0,05 | 0,5 | 0,05 | 0,5 | 0,05 | 0,5 |
| Polyvinylpyrrolidon | [%] | - | - | - | - | - | - | - | - |
| Aceton | [%] | - | - | - | - | - | - | - | - |
| Isopropanol | [%] | 1 | - | 5 | - | 10 | - | 90 | - |
| Tensid | [%] | - | - | - | - | - | - | - | - |
| Wasser | [%] | ca.89 | - | ca.85 | - | ca.80 | - | ca.0 | - |

**Tabelle 1-3**

| Beispiel | - | 10 | | 11 | | 12 | | 13 | |
|---|---|---|---|---|---|---|---|---|---|
| M=Maische, P=Agglomerat | | M | A | M | A | M | A | M | A |
| Aluminiumphosphinat 1 | [%] | 8,9 | 89,5 | 1,0 | 10,0 | 13,3 | 66,3 | 33,2 | 66,3 |
| Harnstoffcyanurat | [%] | - | - | - | - | - | - | - | - |
| Melamincyanurat | [%] | - | - | - | - | - | - | - | - |
| Melamin | [%] | - | - | - | - | - | - | - | - |
| Cyanursäure | [%] | - | - | - | - - | - | - | - | - |
| Melaminpolyphosphat | [%] | 1,0 | 10,0 | 8,9 | 89,5 | 6,5 | 32,7 | 16,3 | 32,7 |
| Melaminphosphat | [%] | - | - | - | - | - | - | - | - |
| Melaminpyrophosphat | [%] | - | - | - | - | - | - | - | - |
| Zinkoxid, aktiv | [%] | - | - | - | - | - | - | - | - |
| Zinkborat | [%] | - | - | - | - | - | - | - | - |
| Polyvinylalkohol | [%] | 0,05 | 0,5 | 0,05 | 0,5 | 0,2 | 1 | 0,5 | 1 |
| Polyvinylpyrrolidon | [%] | - | - | - | - | - | - | - | - |
| Aceton | [%] | - | - | - | - | - | - | - | - |
| Isopropanol | [%] | 5 | - | 5 | - | 5 | - | 5 | - |
| Tensid | [%] | - | - | - | - | - | - | - | - |
| Wasser | [%] | ca.85 | - | ca.85 | - | ca.75 | - | ca.45 | - |

**Tabelle 1-4**

| Beispiel | - | 14 | | 15 | | 16 | | 17 | |
|---|---|---|---|---|---|---|---|---|---|
| M=Maische, P=Agglomerat | | M | A | M | A | M | A | M | A |
| Aluminiumphosphinat 1 | [%] | 12,7 | 63,7 | 12,7 | 63,3 | 12,5 | 62,7 | 11,5 | 57,6 |
| Harnstoffcyanurat | [%] | - | - | - | - | - | - | - | - |
| Melamincyanurat | [%] | - | - | - | - | - | - | - | - |
| Melamin | [%] | - | - | - | - | - | - | - | - |
| Cyanursäure | [%] | - | - | - | - | - | - | - | - |
| Melaminpolyphosphat | [%] | 6,4 | 31,8 | 6,3 | 31,7 | 6,3 | 31,4 | 5,8 | 28,8 |
| Melaminphosphat | [%] | - | - | - | - | - | - | - | - |
| Melaminpyrophosphat | [%] | - | - | - | - | - - - | | | - |
| Zinkoxid, aktiv | [%] | 0,8 | 4,0 | 0,8 | 4 | 0,8 | 3,9 | 0,7 | 3,6 |
| Zinkborat | [%] | - | - | - | - | - | - | - | - |
| Polyvinylalkohol | [%] | 0,1 | 0,5 | 0,2 | 1 | 0,4 | 2 | 2 | 10 |
| Polyvinylpyrrolidon | [%] | - | - | - | - | - | - | - | - |
| Aceton | [%] | - | - | - | - | - | - | - | - |
| Isopropanol | [%] | 5 | | 5 | | 5 | | 5 | |
| Tensid | [%] | - | - | - | - | - | - | - | - |
| Wasser | [%] | ca.75 | - | ca.75 | - | ca.75 | - | ca.75 | - |

**Tabelle 1-5**

| Beispiel | - | 18 | | 19 | | 20 | | 21 | | 22 | | 23 | |
|---|---|---|---|---|---|---|---|---|---|---|---|---|---|
| M=Maische, P=Agglomerat | | M | A | M | A | M | A | M | A | M | A | M | A |
| Aluminiumphosphinat 1 | [%] | 19,0 | 95 | 0,8 | 4,0 | 10,0 | 49,8 | 12,7 | 63,7 | 13,2 | 66 | 13,2 | 66 |
| Harnstoffcyanurat | [%] | - | - | - | - | - | - | - | - | - | - | - | - |
| Melamincyanurat | [%] | - | - | - | - | - | - | - | - | - | - | - | - |
| Melamin | [%] | - | - | - | - | - | - | - | - | - | - | - | - |
| Cyanursäure | [%] | - | - | - | - | - | - | - | - | - | - | - | - |
| Melaminpolyphosphat | [%] | 0,8 | 4,0 | 19,0 | 95 | 5,0 | 24,9 | 6,4 | 31,8 | - | - | - | - |
| Melaminphosphat | [%] | - | - | - | - | - | - | - | - | 6,6 | 33 | - | - |
| Melaminpyrophosphat | [%] | - | - | - | - | - | - | - | - | - | - | 6,6 | 33 |
| Zinkoxid, aktiv | [%] | 0,1 | 0,5 | 0,1 | 0,5 | 5,0 | 24,9 | - | - | - | - | - | - |
| Zinkborat | [%] | - | - | - | - | - | - | 0,8 | 4,0 | - | - | - | - |
| Polyvinylalkohol | [%] | 0,1 | 0,5 | 0,1 | 0,5 | 0,1 | 0,5 | 0,1 | 0,5 | - | - | - | - |
| Polyvinylpyrrolidon | [%] | - | - | - | - | - | - | - | - | 0,2 | 1 | 0,2 | 1 |
| Aceton | [%] | - | - | - | - | - | - | - | - | - | - | - | - |
| Isopropanol | [%] | 5 | - | 5 | - | 5 | - | 5 | - | 5 | - | 5 | - |
| Tensid | [%] | - | - | - | - | - | - | - | - | - | - | - | - |
| Wasser | [%] | ca.75 | | ca.75 | | ca.75 | | ca.75 | | ca.75 | - | ca.75 | - |

**Tabelle 2**

| Beispiel | | | Schüttdichte | Staubneigung | Kornfraktion | Bemerkungen |
|---|---|---|---|---|---|---|
| | | | [g/L] | [%] | [um] | - |
| 24 | Aluminiumphosphinat 2 (Vgl.) | [%] | 399 | 24,2 | - | - |
| 25 | Schmelzgranulat nach 2002DE131 (Vgl.) | [%] | 305 | 4 | 400-1400 | 2 % Binder (Licowax) |
| 26 | Schmelzgranulat nach 2002DE131 (Vgl.) | [%] | 857 | 7 | 400-1400 | 15 % Binder (Licowax) |
| 27 | kompaktiertes Phosphinat nach 2002DE132 (Vgl.) | [%] | 389 | 2 | 400-1000 | 100 % POF |
| 28 | kompaktiertes Phosphinat nach 2002DE132 (Vgl.) | [%] | 817 | 7 | 400-1000 | 100 % POF |
| 29 | Agglomerat nach Beispiel 1 | [%] | 302,5 | 8,8 | 500-800 | - |
| 30 | Agglomerat nach Beispiel 12 | [%] | 273 | 10,1 | 500-800 | - |
| 31 | Agglomerat nach Beispiel 14 | [%] | 279 | 3 | 200-500 | - |
| 32 | Agglomerat nach Beispiel 15 | [%] | 296,5 | 3,4 | 500-1000 - | |
| 33 | Agglomerat nach Beispiel 21 | [%] | 256 | 5,2 | 500-800 | - |
| | POF = Phosphororganisches Flammschutzmittel | | | | | |

**Tabelle 3**

| Beispiel | - | 34 | 35 | 36 | 37 | 38 | 39 | 40 | 41 | 42 | 43 | 44 | 45 | 46 | 47 | 48 | 49 | 50 |
|---|---|---|---|---|---|---|---|---|---|---|---|---|---|---|---|---|---|---|
| Polybutylenterephthalat Nr. 1 | [%] | 50 | - | - | - | - | - | - | - | - | - | - | - | - | - | - | - | - |
| Polybutylenterephthalat Nr. 2 | [%] | - | 49 | 49 | - | - | - | - | - | - | - | - | - | - | - | - | - | - |
| Polyamid 6.6 Nr. 1 | [%] | - | - | - | 50 | 50 | 50 | - | - | - | - | - | - | - | - | - | - | - |
| Polyamid 6.6 Nr. 2 | [%] | - | - | - | - | - | - | 50 | 50 | 50 | 50 | 50 | - | - | - | - | - | - |
| Polyamid 6 Nr. 1 | [%] | - | - | - | - | - | - | - | - | - | - | - | 50 | 50 | 50 | - | - | - |
| Polyamid 6 Nr. 2 | [%] | - | - | - | - | - | - | - | - | - | - | - | - | - | - | 50 | 50 | - |
| Polyamid 12 | [%] | - | - | - | - | - | - | - | - | - | - | - | - | - | - | - | - | 55 |
| Agglomerat nach Beispiel 1 | [%] | 20 | - | - | - | - | - | - | - | - | - | - | - | - | - | - | - | - |
| Agglomerat nach Beispiel 4 | [%] | - | 20 | - | - | - | - | - | - | - | - | - | - | - | - | - | - | - |
| Agglomerat nach Beispiel 12 | [%] | - | - | 20 | 20 | - | - | - | - | - | - | - | 20 | | - | - | - | - |
| Agglomerat nach Beispiel 15 | [%] | - | - | - | - | 20 | - | - | - | - | - | - | - | 20 | - | - | - | - |
| Agglomerat nach Beispiel 21 | [%] | - | - | - | - | - | 20 | - | - | - | - | - | - | - | 20 | - | - | - |
| Agglomerat nach Beispiel 10 | [%] | - | - | - | - | - | - | 20 | - | - | - | - | - | - | - | 20 | - | - |
| Agglomerat nach Beispiel 11 | [%] | - | - | - | - | - | - | - | 20 | - | - | - | - | - | - | - | 20 | - |
| Agglomerat nach Beispiel 18 | [%] | - | - | - | - | - | - | - | - | 20 | - | - | - | - | - | - | - | - |
| Agglomerat nach Beispiel 19 | [%] | - | - | - | - | - | - | - | - | - | 20 | - | - | - | - | - | - | - |
| Agglomerat nach Beispiel 20 | [%] | - | - | - | - | - | - | - | - | - | - | 20 | - | - | - | - | - | - |
| Agglomerat nach Beispiel 3 | [%] | - | - | - | - | - | - | - | - | - | - | - | - | - | - | - | - | 20 |
| Carbodiimid | [%] | - | 1 | 1 | - | - | - | - | - | - | - | - | - | - | - | - | - | - |
| Glasfasern Nr. 1 | [%] | 30 | 30 | 30 | 30 | 30 | 30 | 30 | 30 | 30 | 30 | 30 | 30 | 30 | 30 | 30 | 30 | - |
| Glasfasern Nr. 2 | [%] | - | - | - | - | - | - | - | - | - | - | - | - | - | - | - | - | 25 |

## Patentansprüche

1. Phosphorhaltige Flammschutzmittelagglomerate, enthaltend
a) 99,99 bis 80 Gew.-% Aggregate und/oder Primärteilchen von einem Phosphinsäuresalz der Formel (I) und/oder von einem Diphosphinsäuresalz der Formel (II) und/oder von deren Polymeren, 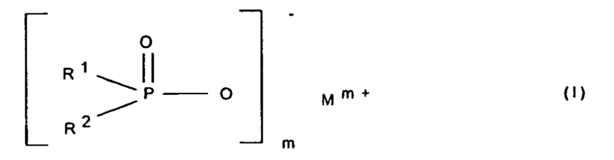 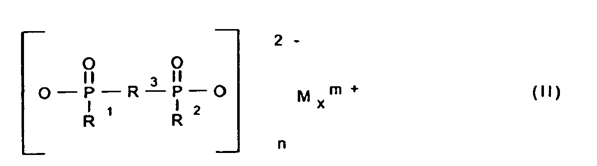 worin
R¹, R² gleich oder verschieden sind und C₁-C₆-Alkyl, linear oder verzweigt und/oder Aryl;
R³ C₁-C₁₀-Alkylen, linear oder verzweigt, C₆-C₁₀-Arylen, -Alkylarylen oder -Arylalkylen;
M Mg, Ca, Al, Sb, Sn, Ge, Ti, Fe, Zr, Ce, Bi, Sr, Mn, Li, Na, K und/oder eine protonierte Stickstoffbase;
m 1 bis 4; n 1 bis 4; x 1 bis 4 bedeuten und
b) 0,01 bis 20 Gew.-% Hilfsmittel, bei denen es sich um Polyvinylalkohol, Polyvinylbutyral (PVB), Polyvinylcaprolactam, Hydroxyethylcellulose, Hydroxypropylcellulose und/oder Natriumcarboxymethylcellulose handelt und die einen Schmelz- bzw. Erweichungspunkt von 40 bis 350°C aufweisen.

2. Phosphorhaltige Flammschutzmittelagglomerate nach Anspruch 1, **dadurch gekennzeichnet, dass** sie
a) 99,99 bis 80 Gew.-% Aggregate und/oder Primärteilchen von einem Phosphinsäuresalz der Formel (I) und/oder von einem Diphosphinsäuresalz der Formel (II) und/oder von deren Polymeren und mindestens einem Synergisten und
b) 0,01 bis 20 Gew.-% Hilfsmittel enthält.

3. Phosphorhaltige Flammschutzmittelagglomerate nach Anspruch 1 oder 2, **dadurch gekennzeichnet, dass** die Komponente a)
30 bis 99,9 Gew.-% Phosphinsäuresalz der Formel (I) und/oder Diphosphinsäuresalz der Formel (II) und/oder deren Polymeren und
0,1 bis 70 Gew.-% mindestens eines Synergisten enthält.

4. Phosphorhaltige Flammschutzmittelagglomerate nach einem oder mehreren der Ansprüche 1 bis 3, **dadurch gekennzeichnet, dass** die Komponente a)
50 bis 99 Gew.-% eines Zink- und/oder Aluminium- und/oder Titan- und/oder Zirkonium- und/oder Eisensalzes der Phosphinsäure der Formel (I) und/oder der Diphosphinsäure der Formel (II) und/oder deren Polymeren und 1 bis 50 Gew.-% mindestens eines Synergisten aus der Gruppe der Salze der Phosphorsäure und deren Kondensationsprodukte und/oder der Salze der Cyanursäure mit Melamin und dessen Kondensationsprodukte und/oder Hydrolyseprodukte enthält.

5. Phosphorhaltige Flammschutzmittelagglomerate nach Anspruch 4, **dadurch gekennzeichnet, dass** die Komponente a) zusätzlich 1 bis 50 Gew.-% mindestens eines Synergisten aus der Gruppe der Zinkverbindungen enthält.

6. Phosphorhaltige Flammschutzmittelagglomerate nach einem oder mehreren der Ansprüche 1 bis 4, **dadurch gekennzeichnet, dass** es sich bei dem Synergisten um eine Stickstoff-, Phosphor- oder Phosphorstickstoffverbindung handelt, vorzugsweise um Stickstoffverbindungen der Formeln (III) bis (VIII) oder Gemische davon, 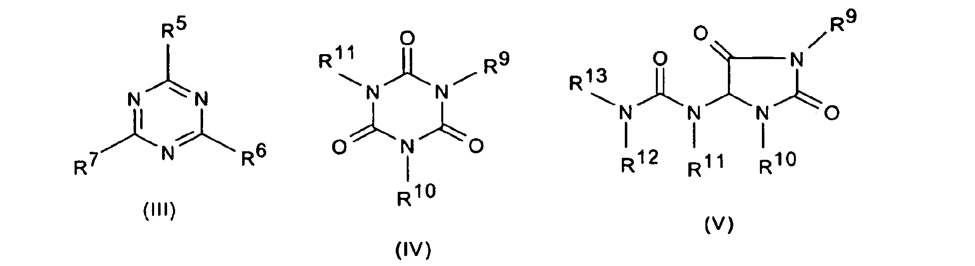 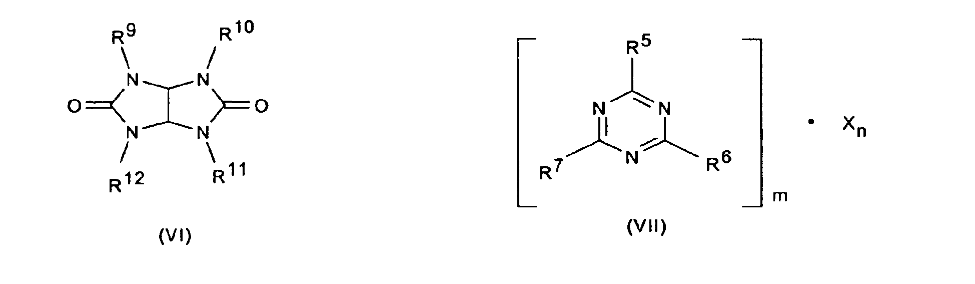 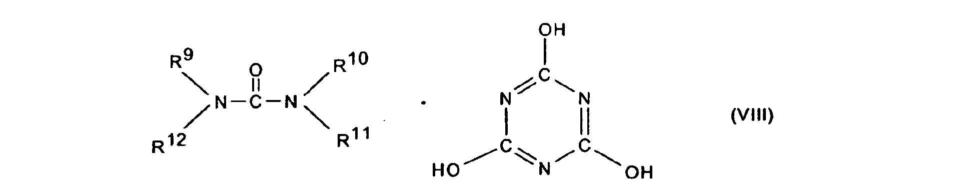 worin
R⁵ bis R⁷ Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈₋Alkenyl, C₁-C₈-Alkoxy, -Acyl, -Acyloxy, C₆-C₁₂-Aryl oder -Arylalkyl, -OR⁸ und -N(R⁸)R⁹, sowie N-alicyclisch oder N-aromatisch,
R⁸ Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈₋Alkenyl, C₁-C₈-Alkoxy, -Acyl, -Acyloxy oder C₆-C₁₂-Aryl oder -Arylalkyl,
R⁹ bis R¹³ die gleichen Gruppen wie R⁸ sowie -O-R⁸,
m und n unabhängig voneinander 1, 2, 3 oder 4,
X Säuren, die Addukte mit Triazinverbindungen (III) bilden können, bedeuten, handelt.

7. Phosphorhaltige Flammschutzmittelagglomerate nach Anspruch 5, **dadurch gekennzeichnet, dass** es sich bei den Zinkverbindungen um Zinkoxid, Zinkhydroxid, Zinkoxidhydrat, wasserfreies Zinkcarbonat, basisches Zinkcarbonat, Zinkhydroxidcarbonat, basisches Zinkcarbonathydrat, (basisches) Zinksilicat, Zinkhexafluorosilicat, Zinkstannat, Zink-Magnesium-Aluminium-Hydroxid-Carbonat, Zinkhexafluorosilicathexahydrat, Zinksalze der Oxosäuren der dritten Hauptgruppe wie Zinkborat, Zinksalze der Oxosäuren der fünften Hauptgruppe wie Zinkphosphat, Zinkpyrophosphat, Zinksalze der Oxosäuren der Übergangsmetalle, wie Zinkchromat(VI)hydroxyd (Zinkgelb), Zinkchromit, Zinkmolybdat, Zinkpermanganat, Zinkmolybdat-Magnesiumsilicat, Zinkpermanganat, handelt.

8. Phosphorhaltige Flammschutzmittelagglomerate nach einem oder mehreren der Ansprüche 1 bis 7, **dadurch gekennzeichnet, dass** der Schmelz- bzw. Erweichungspunkt des Hilfsmittels 60 bis 300°C beträgt.

9. Phosphorhaltige Flammschutzmittelagglomerate nach einem oder mehreren der Ansprüche 1 bis 8, **dadurch gekennzeichnet, dass** ihre mittlere Teilchengröße 0,1 bis 3000 µm beträgt, bevorzugt 100 bis 3000 µm und besonders bevorzugt 200 bis 2000 µm, oder dass ihre Schüttdichte 80 bis 1500 g/l beträgt, bevorzugt 80 bis 800 g/l, besonders bevorzugt 200 bis 500 g/l und ganz besonders bevorzugt 200 bis 400 g/l, oder dass der mittlere Teilchendurchmesser der eingesetzten Phosphinat- bzw. Synergisten-Aggregate 0,1 bis 500 µm beträgt, bevorzugt 1 bis 100 µm, oder dass der mittlere Teilchendurchmesser der Phosphinat- bzw. Synergisten-Primärpartikel 0,1 bis 50 µm, bevorzugt 1 bis 10 µm beträgt.

10. Verfahren zur Herstellung von phosphorhaltigen Flammschutzmittelagglomeraten nach einem oder nach mehreren der Ansprüche 1 bis 9, **dadurch gekennzeichnet, dass** man Aggregate und/oder Primärteilchen von einem Phosphinsäuresalz der Formel (I) und/oder von einem Diphosphinsäuresalz der Formel (II) und/oder von deren Polymeren und ggf. mindestens einem Synergisten in Gegenwart eines Hilfsmittels in einem Mischer, einer Wirbelschicht oder durch Sprühtrocknen agglomeriert.

11. Verfahren nach Anspruch 10, **dadurch gekennzeichnet, dass** man Aggregate und/oder Primärteilchen von einem Phosphinsäuresalz der Formel (I) und/oder von einem Diphosphinsäuresalz der Formel (II) und/oder von deren Polymeren und ggf. mindestens einem Synergisten sowie dem Hilfsmittel in einem Lösungsmittel dispergiert, zum Wirbelbett dosiert, trocknet und granuliert, dann die Agglomerate entnimmt und das Gutkorn separiert.

12. Verfahren nach Anspruch 10, **dadurch gekennzeichnet, dass** man Aggregate und/oder Primärteilchen von einem Phosphinsäuresalz der Formel (I) und/oder von einem Diphosphinsäuresalz der Formel (II) und/oder von deren Polymeren und ggf. mindestens einem Synergisten sowie das Hilfsmittel zum Wirbelbett dosiert, ein Lösungsmittel zudosiert, granuliert, dann die Agglomerate entnimmt und das Gutkorn separiert.

13. Verfahren nach einem oder mehreren der Ansprüche 10 bis 11, **dadurch gekennzeichnet, dass** die Agglomeration einstufig oder mehrstufig bei einem Druck von 10 bis 100.000.000 Pa, über eine Zeitdauer von 0,01 bis 1000 h und einer Temperatur im Bereich von -20 bis +500°C, bevorzugt von 50 bis 350°C, erfolgt.

14. Flammgeschützte Polymerformmasse, **dadurch gekennzeichnet, dass** sie 1 bis 50 Gew.-% phosphorhaltige Flammschutzmittelagglomerate nach einem der Ansprüche 1 bis 9,
1 bis 99 Gew.-% thermoplastisches Polymer oder Mischungen derselben
0 bis 60 Gew.-% Additive
0 bis 60 Gew.-% Füllstoff enthält.

15. Flammgeschützte Polymerformmasse nach Anspruch 14, **dadurch gekennzeichnet, dass** es sich bei den thermoplastischen Polymeren um Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/Acrylnitril-Butadien-Styrol) handelt.

## Claims

1. A phosphorus-containing flame retardant agglomerate, comprising
a) from 99.99 to 80% by weight of aggregates and/or primary particles composed of a phosphinic salt of the formula (I) and/or composed of a diphosphinic salt of the formula (II), and/or composed of polymers of these, 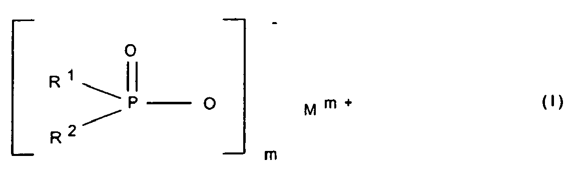 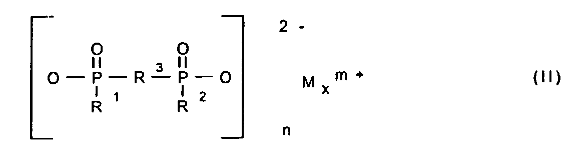 where
R¹,R² are identical or different and are C₁-C₆-alkyl, linear or branched, and/or aryl;
R³ is C₁-C₁₀-alkylene, linear or branched, C₆-C₁₀-arylene, -alkylarylene or -arylalkylene;
M is Mg, Ca, Al, Sb, Sn, Ge, Ti, Fe, Zr, Ce, Bi, Sr, Mn, Li, Na, K and/or a protonated nitrogen base;
m is from 1 to 4; n is from 1 to 4; x is from 1 to 4 and
b) from 0.01 to 20% by weight of auxiliaries which comprise polyvinyl alcohol, polyvinyl butyral (PVB), polyvinylcaprolactam, hydroxyethylcellulose, hydroxypropylcellulose, and/or sodium carboxymethylcellulose and which have a melting or softening point from 40 to 350°C.

2. The phosphorus-containing flame retardant agglomerates as claimed in claim 1, which comprise
a) from 99.99 to 80% by weight of aggregates and/or primary particles composed of a phosphinic salt of the formula (I) and/or composed of a diphosphinic salt of the formula (II), and/or composed of polymers of these, and composed of at least one synergist, and
b) from 0.01 to 20% by weight of auxiliaries.

3. The phosphorus-containing flame retardant agglomerate as claimed in claim 1 or 2, wherein component a) comprises
from 30 to 99.9% by weight of phosphinic salt of the formula (I) and/or diphosphinic salt of the formula (II), and/or polymers of these, and
from 0.1 to 70% by weight of at least one synergist.

4. The phosphorus-containing flame retardant agglomerate as claimed in one or more of claims 1 to 3, wherein component a) comprises
from 50 to 99% by weight of a zinc and/or aluminum and/or titanium and/or zirconium and/or iron salt of phosphinic acid of the formula (I), and/or of diphosphinic acid of the formula (II), and/or polymers of these, and
from 1 to 50% by weight of at least one synergist from the group of the salts of phosphoric acid and their condensates and/or of the salts of cyanuric acid with melamine and its condensates and/or hydrolysis products.

5. The phosphorus-containing flame retardant agglomerate as claimed in claim 4, wherein component a) also comprises
from 1 to 50% by weight of at least one synergist from the group of the zinc compounds.

6. The phosphorus-containing flame retardant agglomerate as claimed in one or more of claims 1 to 4, wherein the synergist comprises a compound of nitrogen, of phosphorus, or of phosphorus and nitrogen, preferably nitrogen compounds of the formulae (III) to (VIII), or a mixture thereof 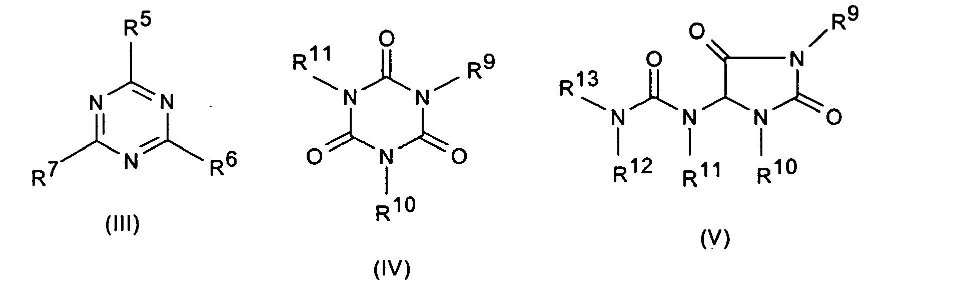 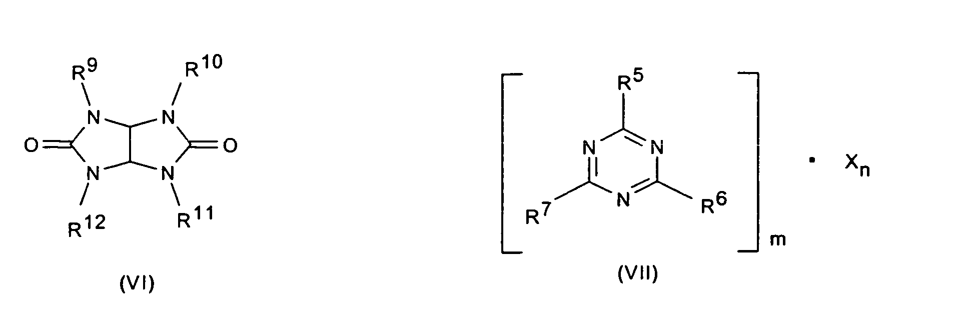 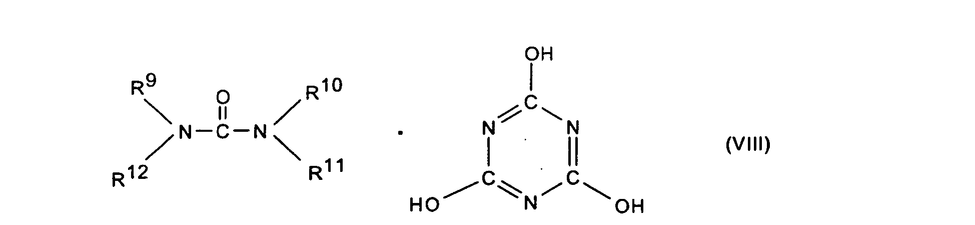 where
R⁵ to R⁷ are hydrogen, C₁-C₈-alkyl, C₅-C₁₆-cycloalkyl or -alkylcycloalkyl, where appropriate substituted with a hydroxy function or with a C₁-C₄-hydroxyalkyl function, C₂-C₈-alkenyl, C₁-C₈-alkoxy, -acyl, -acyloxy, C₆-C₁₂-aryl or -arylalkyl, -OR⁸, and -N(R⁸)R⁹, either N-alicyclic or N-aromatic,
R⁸ is hydrogen, C₁-C₈-alkyl, C₅-C₁₆-cycloalkyl or -alkylcycloalkyl, where appropriate substituted with a hydroxy function or with a C₁-C₄-hydroxyalkyl function, C₂-C₈-alkenyl, C₁-C₈-alkoxy, -acyl, -acyloxy, or C₆-C₁₂-aryl or -arylalkyl,
R⁹ to R¹³ are groups identical with R⁸ or else -O-R⁸,
m and n, independently of one another, are 1, 2, 3, or 4, and
X is acids which can-form adducts with triazine compounds (III).

7. The phosphorus-containing flame retardant agglomerate as claimed in claim 5, wherein the zinc compounds comprise zinc oxide, zinc hydroxide, zinc oxide hydrate, anhydrous zinc carbonate, basic zinc carbonate, zinc hydroxide carbonate, basic zinc carbonate hydrate, (basic) zinc silicate, zinc hexafluorosilicate, zinc stannate, zinc magnesium aluminum hydroxide carbonate, zinc hexafluorosilicate hexahydrate, zinc salts of the oxo acids of the third main group, e.g. zinc borate, zinc salts of the oxo acids of the fifth main group, e.g. zinc phosphate, zinc pyrophosphate, zinc salts of the oxo acids of the transition metals, e.g. zinc chromate(VI) hydroxide (zinc yellow), zinc chromite, zinc molybdate, zinc permanganate, zinc molybdate magnesium silicate.

8. The phosphorus-containing flame retardant agglomerate as claimed in one or more of claims 1 to 7, wherein the melting or softening point of the auxiliary is from 60 to 300°C.

9. The phosphorus-containing flame retardant agglomerate as claimed in one or more of claims 1 to 8, whose median particle size is from 0.1 to 3000 µm, preferably from 100 to 3000 µm, and particularly preferably from 200 to 2000 µm, or whose bulk density is from 80 to 1500 g/l, preferably from 80 to 800 g/l, particularly preferably from 200 to 500 g/I, and very particularly preferably from 200 to 400 g/l, or wherein the median particle diameter of the phosphinate aggregates or synergist aggregates used is from 0.1 to 500 µm, preferably from 1 to 100 µm, or wherein the median particle diameter of the phosphinate primary particles or synergist primary particles used is from 0.1 to 50 µm, preferably from 1 to 10 µm.

10. A process for preparing phosphorus-containing flame retardant agglomerates as claimed in one or more of claims 1 to 9, which comprises agglomerating aggregates and/or primary particles composed of a phosphinic salt of the formula (I) and/or composed of a diphosphinic salt of the formula (II), and/or composed of polymers of these, and, where appropriate, composed of at least one synergist, in the presence of an auxiliary in a mixer, or a fluidized bed, or via spray drying.

11. The process as claimed in claim 10, wherein aggregates and/or primary particles composed of a phosphinic salt of the formula (I), and/or composed of a diphosphinic salt of the formula (II), and/or composed of polymers of these, and, where appropriate, composed of at least one synergist, and also of the auxiliary, are dispersed in a solvent, fed to the fluidized bed, dried, and granulated, the agglomerates then being isolated, and the product having the specified grain size separated.

12. The process as claimed in claim 10, wherein aggregates and/or primary particles composed of a phosphinic salt of the formula (I), and/or composed of a diphosphinic salt of the formula (II), and/or composed of polymers of these, and, where appropriate, composed of at least one synergist, are fed, together with the auxiliary, to the fluidized bed, and a solvent is metered in, the material then being granulated, and the agglomerates then being isolated, and the product having the specified grain size separated.

13. The process as claimed in one or more of claims 10 to 11, wherein the agglomeration takes place in one or more stages at a pressure of from 10 to 100 000 000 Pa, for a period of from 0.01 to 1000 h, and at a temperature in the range from -20 to +500°C, preferably from 50 to 350°C.

14. A flame-retardant polymer molding composition, which comprises
from 1 to 50% by weight of phosphorus-containing flame retardant agglomerates as claimed in any of claims 1 to 9,
from 1 to 99% by weight of thermoplastic polymer or a mixture of the same,
from 0 to 60% by weight of additives,
from 0 to 60% by weight of filler.

15. The flame-retardant polymer molding composition as claimed in claim 14, wherein the thermoplastic polymer comprises HI (high-impact) polystyrene, polyphenylene ether, polyamides, polyesters, polycarbonates, and blends or polyblends of the type represented by ABS (acrylonitrile-butadiene-styrene) or PC/ABS (polycarbonate/acrylonitrile-butadiene-styrene).

## Revendications

1. Agglomérés ignifuges phosphorés contenant
a) de 99,99 à 80 % en poids d'agrégats et/ou de particules primaires d'un sel de l'acide phosphinique de formule (I) et/ou d'un sel de l'acide diphosphonique de formule (II) et/ou de leurs polymères, 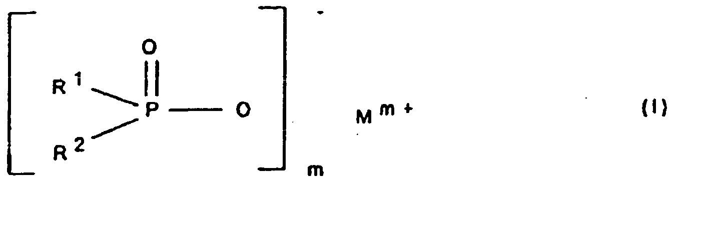 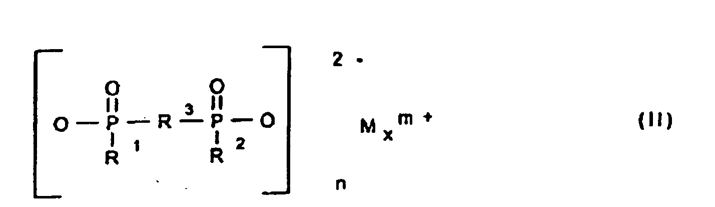 dans lesquels
R¹ et R² sont identiques ou différents et représentent des groupes alkyle en C₁-C₆, à chaîne droite ou ramifiée, et/ou aryle ;
R³ est un radical alkylène en C₁-C₁₀ à chaîne droite ou ramifiée, arylène, alkylarylène ou arylalkylène en C₆₋C₁₀ ;
M est Mg, Ca, Al, Sb, Sn, Ge, Ti, Fe, Zr, Ce, Bi, Sr, Mn, Li, Na, K et/ou une base azotée protonée ;
m vaut 1 à 4 ; n vaut 1 à 4 ; x vaut 1 à 4, et
b) de 0,01 à 20 % en poids d'adjuvants, pour ce qui concerne lesquels il s'agit de poly(alcool vinylique), de polyvinylbutyral (PVB), de polyvinylcaprolactame, d'hydroxyéthylcellulose, d'hydroxypropylcellulose et/ou de carboxyméthylcellulose sodique, et qui ont un point de fusion ou de ramollissement de 40 à 350°C.

2. Agglomérés ignifuges phosphorés selon la revendication 1, **caractérisés en ce qu'**ils contiennent
a) de 99,99 à 80 % en poids d'agrégats et/ou de particules primaires d'un sel de l'acide phosphinique de formule (I) et/ou d'un sel de l'acide diphosphonique de formule (II) et/ou de leurs polymères, et au moins d'un synergiste, et
b) de 0,01 à 20 % en poids d'adjuvants.

3. Agglomérés ignifuges phosphorés selon la revendication 1 ou 2, **caractérisés en ce que** le composant a) contient
de 30 à 99,9 % en poids d'un sel de l'acide phosphonique de formule (I) et/ou un sel de l'acide diphosphinique de formule (II) et/ou leurs polymères, et
de 0,1 à 70 % en poids d'au moins un synergiste.

4. Agglomérés ignifuges phosphorés selon l'une ou plusieurs des revendications 1 à 3, **caractérisés en ce que** le composant a) contient de 50 à 99 % en poids d'un sel de zinc et/ou d'aluminium et/ou de titane et/ou de zirconium et/ou de fer de l'acide phosphinique de formule (I) et/ou de l'acide diphosphinique de formule (II) et/ou de leurs polymères et de 1 à 50 % en poids d'au moins un synergiste choisi dans l'ensemble comprenant les sels de l'acide phosphorique et leurs produits de condensation et/ou les sels de l'acide cyanurique obtenus avec la mélamine, et ses produits de condensation et/ou produits d'hydrolyse.

5. Agglomérés ignifuges phosphorés selon la revendication 4, **caractérisés en ce que** le composant a) contient en outre de 1 à 50 % en poids d'au moins un synergiste choisi dans l'ensemble des composés du zinc.

6. Agglomérés ignifuges phosphorés selon l'une ou plusieurs des revendications 1 à 4, **caractérisés en ce que**, pour ce qui concerne le synergiste, il s'agit d'un composé azoté, phosphoré ou phosphoré et azoté, de préférence de composés azotés ayant les formules (III) à (VIII), ou de mélanges de ceux-ci 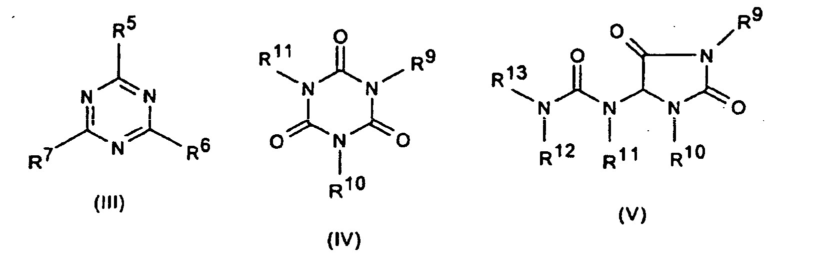 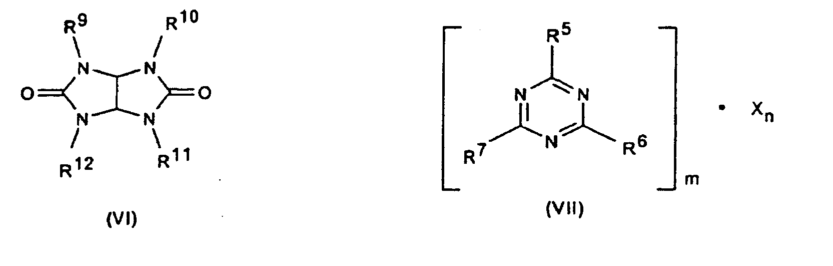 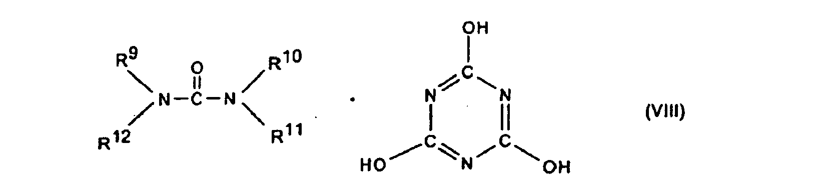 dans lesquelles
R⁵ à R⁷ représentent des atomes d'hydrogène, des groupes alkyle en C₁-C₈, cycloalkyle ou alkylcycloalkyle en C₅-C₁₆, éventuellement substitués par une fonction hydroxy ou hydroxyalkyle en C₁-C₄, alcényle en C₂-C₈, alcoxy, acyle, acyloxy en C₁-C₈, aryle ou arylalkyle en C₆-C₁₂, -OR⁸ et -N(R⁸)R⁹, tant N-alicyclique, que N-aromatique,
R⁸ est un atome d'hydrogène ou un groupe alkyle en C₁-C₈, cycloalkyle ou alkylcycloalkyle en C₅-C₁₆, éventuellement substitué par une fonction hydroxy ou hydroxyalkyle en C₁-C₄, alcényle en C₂-C₈, alcoxy, acyle, acyloxy en C₁-C₈, ou aryle ou arylalkyle en C₆-C₁₂,
R⁹ à R¹³ sont les mêmes groupes que R⁸, ainsi que -OR⁸,
m et n valent chacun indépendamment de l'autre 1, 2, 3 ou 4,
X représente des acides, qui peuvent former des adduits avec les triazines (III).

7. Agglomérés ignifuges phosphorés selon la revendication 5, **caractérisés en ce que**, en ce qui concerne les composés du zinc, il s'agit de l'oxyde de zinc, de l'hydroxyde de zinc, de l'oxyhydrate de zinc, du carbonate de zinc anhydre, du carbonate basique de zinc, de l'hydrocarbonate de zinc, du carbonate basique de zinc hydraté, du silicate de zinc (basique), de l'hexafluorosilicate de zinc, du stannate de zinc, de l'hydroxycarbonate de zinc, de magnésium et d'aluminium, de l'hexafluorosilicate de zinc hexahydraté, des sels de zinc des acides oxo du troisième groupe principal, tels que le borate de zinc, des sels de zinc des acides oxo du cinquième groupe principal, tels que le phosphate de zinc, le pyrophosphate de zinc, des sels de zinc des acides oxo des métaux de transition, tels que le chromate (VI) et hydroxyde zinc (zone de zinc), le chromite de zinc, le molybdate de zinc, le permanganate de zinc, le molybdate de zinc-silicate de magnésium, le permanganate de zinc.

8. Agglomérés ignifuges phosphorés selon l'une ou plusieurs des revendications 1 à 7, **caractérisés en ce que** le point de fusion ou le point de ramollissement de l'adjuvant est de 60 à 300°C.

9. Agglomérés ignifuges phosphorés selon l'une ou plusieurs des revendications 1 à 8, **caractérisés en ce que** leur granulométrie moyenne est de 0,1 à 3000 µm, de préférence de 100 à 3000 µm et d'une manière particulièrement préférée de 200 à 2000 µm, ou que leur masse volumique apparente est de 80 à 1500 g/l, de préférence de 80 à 800 g/l, d'une manière particulièrement préférée de 200 à 500 g/l et d'une manière tout particulièrement préférée de 200 à 400 g/l, ou que la granulométrie moyenne des agrégats utilisés de phosphinates ou de synergistes est de 0,1 à 500 µm, de préférence de 1 à 100 µm, ou que le granulométrie moyenne des particules primaires de phosphinates ou de synergistes est de 0,1 à 50 µm et de préférence de 1 à 10 µm.

10. Procédé de préparation d'agglomérés ignifuges phosphorés selon l'une ou plusieurs des revendications 1 à 9, **caractérisé en ce qu'**on agglomère des agrégats et/ou des particules primaires d'un sel de l'acide phosphinique de formule (I) et/ou d'un sel de l'acide diphosphinique de formule (II) et/ou de leurs polymères, et éventuellement d'au moins un synergiste, en présence d'un adjuvant, dans un mélangeur, dans un lit fluidisé ou par séchage par atomisation.

11. Procédé selon la revendication 10, **caractérisé en ce qu'**on disperse dans un solvant des agrégats et/ou des particules primaires d'un sel de l'acide phosphinique de formule (I) et/ou d'un sel de l'acide diphosphinique de formule (II) et/ou de leurs polymères et éventuellement d'au moins un synergiste, ainsi que de l'adjuvant, on les introduit dans un lit fluidisé, on les sèche et on les granule, puis on retire les agglomérés, et on sépare les grains ayant la granulométrie voulue.

12. Procédé selon la revendication 10, **caractérisé en ce qu'**on introduit dans le lit fluidisé des agrégats et/ou des particules primaires d'un sel de l'acide phosphinique de formule (I) et/ou d'un sel de l'acide diphosphinique de formule (II) et/ou de leurs polymères, et éventuellement d'au moins un synergiste, ainsi que l'adjuvant, on ajoute un solvant, on granule, puis on prélève les agglomérés et on sépare les grains ayant la bonne granulométrie.

13. Procédé selon l'une ou plusieurs des revendications 10 à 11, **caractérisé en ce que** l'agglomération est effectuée en une ou plusieurs étapes sous une pression de 10 à 100 000 000 Pa, sur un laps de temps de 0,01 à 1000 h et à une température comprise dans la plage de -20 à +500°C et de préférence de 50 à 350°C.

14. Mélange à mouler polymère ignifugé, **caractérisé en ce qu'**il contient
de 1 à 50 % en poids d'agglomérés ignifuges phosphorés selon l'une ou plusieurs des revendications 1 à 9,
de 1 à 99 % en poids d'un polymère thermoplastique ou de mélanges de ce dernier,
de 0 à 60 % en poids d'additifs,
de 0 à 60 % en poids d'une matière de charge.

15. Mélange à mouler polymère ignifugé selon la revendication 14, **caractérisé en ce que**, pour ce qui concerne les polymères thermoplastiques, il s'agit de polystyrène HI (à grande résistance au choc), de polyphénylène-éthers, de polyamides, de polyesters, de polycarbonates et de mélanges, ou de mélanges polymères du type ABS (acrylonitrile-butadiène-styrène) ou PC/ABS (polycarbonate/acrylonitrile-butadiène-styrène).
